# EUROPEAN PATENT SPECIFICATION

(11) **EP 3 557 799 B1**
(45) Date of publication and mention of the grant of the patent: **30.12.2020**
(21) Application number: 17889559.5
(22) Date of filing: 24.07.2017
(51) Int. Cl.: H04L 5/00, H04L 5/14, H04L 27/26, H04W 72/12

(54) **UPLINK CONTROL CHANNEL TRANSMISSION AND RECEPTION METHODS AND DEVICES**
VERFAHREN UND VORRICHTUNGEN ZUR ÜBERTRAGUNG UND EMPFANGUNG VON UPLINK-STEUERUNGSKANAL
PROCÉDÉS ET DISPOSITIVES DE TRANSMISSION ET DE RÉCEPTION DE CANAUX DE COMMANDE DE LIAISON MONTANTE

(30) Priority: 06.01.2017 WO PCT/CN2017/070498
(43) Date of publication of application: 23.10.2019
(73) Proprietor: Huawei Technologies Co., Ltd., Longgang District Shenzhen, Guangdong 518129 (CN)
(72) Inventor: WANG, Da, Shenzhen Guangdong 518129 (CN); WANG, Jian, Shenzhen Guangdong 518129 (CN); LIU, Yun, Shenzhen Guangdong 518129 (CN)
(74) Representative: Epping - Hermann - Fischer
(86) International application number: PCT/CN2017/094127
(87) International publication number: WO 2018/126647

(56) References cited:
- CN-A- 103 384 183
- CN-A- 103 427 940
- CN-A- 106 257 856
- CN-A- 106 301 695
- US-A1- 2008 200 196
- LG ELECTRONICS MOTOROLA MOBILITY: "WF on UL control channel for NR", 3GPP DRAFT; R1-1613412 WF ON UL CONTROL CHANNEL FOR NR_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 19 November 2016 (2016-11-19), XP051191272, Retrieved from the Internet: URL:http://www.3gpp.org/ftp/tsg_ran/WG1_RL 1/TSGR1_87/Docs/ [retrieved on 2016-11-19]
- ERICSSON: "Summary of offline discussion on UL control channels", 3GPP DRAFT; R1-1613721 SUMMARY OF OFFLINE DISCUSSION ON UL CONTROL CHANNELS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , 19 November 2016 (2016-11-19), XP051191540, Retrieved from the Internet: URL:http://www.3gpp.org/ftp/tsg_ran/WG1_RL 1/TSGR1_87/Docs/ [retrieved on 2016-11-19]
- MOTOROLA MOBILITY: "Discussion on UCI transmission in NR", 3GPP DRAFT; R1-1612747 DISCUSSION ON UCI TRANSMISSION IN NR FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. Reno, Nevada, USA; 20161114 - 20161118 13 November 2016 (2016-11-13), XP051176689, Retrieved from the Internet: URL:http://www.3gpp.org/ftp/Meetings_3GPP_ SYNC/RAN1/Docs/ [retrieved on 2016-11-13]
- QUALCOMM INCORPORATED: "Uplink Control Channel Design for Shortened TTI", 3GPP DRAFT; R1-1611639 UPLINK CONTROL CHANNEL DESIGN FOR SHORTENED TTI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Reno, USA; 20161114 - 20161118 13 November 2016 (2016-11-13), XP051175612, Retrieved from the Internet: URL:http://www.3gpp.org/ftp/Meetings_3GPP_ SYNC/RAN1/Docs/ [retrieved on 2016-11-13]
- CMCC: "Further discussion on uplink control channel design for NR", 3GPP DRAFT; R1-1612191, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161014 - 20161018 13 November 2016 (2016-11-13), XP051176143, Retrieved from the Internet: URL:http://www.3gpp.org/ftp/Meetings_3GPP_ SYNC/RAN1/Docs/ [retrieved on 2016-11-13]
- HUAWEI HISILICON: "Signalling design for UL control resource in NR", 3GPP DRAFT; R1-1611213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051175194, Retrieved from the Internet: URL:http://www.3gpp.org/ftp/Meetings_3GPP_ SYNC/RAN1/Docs/ [retrieved on 2016-11-13]

## Description

### TECHNICAL FIELD

Embodiments of this application relate to the field of communications technologies, and in particular, to an uplink control channel transmission method and apparatus.

### BACKGROUND

In a Long Term Evolution (Long Term Evolution, LTE) communications system, a terminal sends uplink control information to a network side device by using an uplink control channel. The uplink control information is used to feed back an acknowledgement of downlink data, a channel status, or the like to the network side device. The uplink control channel occupies 14 symbols (symbol) of a subframe (also referred to as a timeslot) in time domain, and occupies physical resource blocks (Physical Resource Block, PRB) at two ends of system bandwidth in frequency domain. A combination manner of a time-frequency resource occupied by the uplink control channel is referred to as a format of the uplink control channel. It can be learned from the foregoing that in LTE, the format of the uplink control channel is fixed, and the network side device does not need to send signaling to the terminal to indicate the format of the uplink control channel.

In future 5th Generation Mobile Communication (the 5th Generation Mobile Communication, 5G), an uplink control channel includes two types: a short duration uplink control (short duration UL control) channel and a long duration uplink control (long duration UL control) channel. The short duration UL control channel needs to occupy one or two symbols. In addition, in 5G, there are various types of timeslots or subframes used to carry an uplink control channel, such as a downlink domain (DL domain) timeslot or subframe, an uplink domain (UL domain) timeslot or subframe, and an uplink only (UL only) timeslot or subframe. Last one or two symbols of the DL domain timeslot or subframe is/are an uplink transmission resource, and is/are mainly used to transmit a short duration UL control channel. First two or three symbols of the UL domain timeslot or subframe are a downlink transmission resource and a gap (Gap), and remaining symbols are an uplink transmission resource. All symbols of the UL only timeslot or subframe are an uplink transmission resource. When uplink control channels are carried by using the UL domain timeslot or subframe or the UL only timeslot or subframe, formats of the uplink control channels are different, because the short duration UL control channel may occupy one or two symbols, the long duration UL control channel may occupy three to 14 symbols, and quantities of occupied symbols are different. In addition, subframes of a same type include different quantities of symbols. For example, a UL domain timeslot or subframe type includes a UL domain timeslot or subframe occupying seven symbols and a UL domain timeslot or subframe including 14 symbols. Therefore, when uplink control channels are carried by using different types of subframes, there are a plurality of formats of uplink control channels. This increases complexity of scheduling an uplink control channel.

Document LG ELECTRONICS MOTOROLA MOBILITY, "WF on UL control channel for NR", vol. RAN WG1, no. Reno, USA; 3GPP DRAFT; Rl-1613412 WF ON UL CONTROL CHANNEL FOR NR_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, proposes that both short duration UL control channel and long duration UL control channel can be configured within a same slot by gNB, and both short duration UL control channel and long duration UL control channel can be transmitted in a same slot from a single UE.

Document ERICSSON, "Summary of offline discussion on UL control channels", 3GPP DRAFT; R1-1613721 SUMMARY OF OFFLINE DISCUSSION ON UL CONTROL CHANNELS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, summarizes that in order to support TDM of short PUCCH from different UEs in the same slot, a mechanism to tell the UE in which symbols in a slot to transmit the short PUCCH is supported at least above 6 GHz.

Document MOTOROLA MOBILITY, "Discussion on UCI transmission in NR", vol. RAN WG1, no. Reno, Nevada, USA; 3GPP DRAFT; R1-1612747 DISCUSSION ON UCI TRANSMISSION IN NR FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, proposes to study support for different multiplexing options of uncoordinated UCI and UL data within a slot with minimal performance impact, taking into account various UE beamforming architectures/hardware capability and deployment scenario.

Document QUALCOMM INCORPORATED, "Uplink Control Channel Design for Shortened TTI", vol. RAN WG1, no. Reno, USA; 3GPP DRAFT; R1-1611639 UPLINK CONTROL CHANNEL DESIGN FOR SHORTENED TTI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, relates to 2-Symbol sPUCCH Design.

Document CMCC, "Further discussion on uplink control channel design for NR", vol. RAN WG1, no. Reno, USA; 3GPP DRAFT; R1-1612191, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, relates to uplink control channel design for NR.

### SUMMARY

Embodiments of the present invention are defined by the appended claims. All embodiments and/or aspects not falling under the scope of the appended claims are to be considered merely as examples suitable for understanding the invention. This application provides an uplink control channel transmission method and apparatus to reduce complexity of scheduling an uplink control channel.

According to a first aspect, an embodiment of this application provides an uplink control channel transmission method. In the method, at least one first-format uplink control channel and at least one second-format uplink control channel are added to a first timeslot or subframe, and then the first timeslot or subframe including the at least one first-format uplink control channel and the at least one second-format uplink control channel is transmitted.

According to the foregoing method, there are only two formats of uplink control channels in a timeslot or subframe, so that uplink scheduling complexity is reduced.

In a feasible design, a symbol occupied by at least one of the at least one first-format uplink control channel is completely different from or partially the same as a symbol occupied by at least one of the at least one second-format uplink control channel.

In the method, flexible configuration of a time domain resource occupied by uplink control channels in two different formats is implemented.

In a feasible design, at least one of the at least one first-format uplink control channel occupies a first frequency resource, at least one of the at least one second-format uplink control channel occupies a second frequency resource, and the first frequency resource is completely different from or partially the same as the second frequency resource.

Further, the first frequency resource occupies two ends of a system frequency band, and the second frequency resource occupies all or a part of the system frequency band, or the second frequency occupies a part of the system frequency band except the first frequency resource.

In the method, flexible configuration of a frequency resource occupied by uplink control channels in two different formats is implemented.

In a feasible design, the first timeslot or subframe further includes at least one third-format uplink control channel; and a symbol occupied by at least one of the at least one third-format uplink control channel is completely different from or partially the same as the symbol occupied by the at least one of the at least one first-format uplink control channel; or a symbol occupied by at least one of the at least one third-format uplink control channel is completely different from or partially the same as the symbol occupied by the at least one of the at least one second-format uplink control channel.

In the method, there are only three formats of uplink control channels, so that uplink scheduling complexity is reduced, and flexible configuration of a time domain resource occupied by the uplink control channels in the three different formats is implemented.

In a feasible design, the at least one of the at least one first-format uplink control channel occupies the first frequency resource, the at least one of the at least one second-format uplink control channel occupies the second frequency resource, the at least one third-format uplink control channel of the at least one third-format uplink control channel format occupies a third frequency resource, and the first frequency resource is completely different from or partially the same as the second frequency resource; and
the third frequency resource is completely different from or partially the same as the first frequency resource, or the third frequency resource is completely different from or partially the same as the second frequency resource.

In a feasible design, the third frequency occupies all or a part of the system frequency band, or the third frequency occupies a part of the system frequency band except the first frequency resource and the second frequency resource.

In a feasible design, the first-format uplink control channel, the second-format uplink control channel, or the third-format uplink control channel occupies at least two parts of frequency resources, and at least two of the at least two parts of frequency resources are different.

In the method, frequency diversity gains are implemented.

In a feasible design, the at least one first-format uplink control channel is specifically one first-format uplink control channel, and the at least one second-format uplink control channel is specifically one second-format uplink control channel, where
the first-format uplink control channel occupies seven symbols of the first timeslot or subframe, the second-format uplink control channel occupies four symbols of the first timeslot or subframe, and the seven symbols are completely different from or partially the same as the four symbols in the first timeslot or subframe; or
the first-format uplink control channel occupies 10 symbols of the first timeslot or subframe, the second-format uplink control channel occupies one symbol of the first timeslot or subframe, and the 10 symbols are completely different from or partially the same as the one symbol in the first timeslot or subframe; or
the first-format uplink control channel occupies 11 symbols of the first timeslot or subframe, the second-format uplink control channel occupies one symbol of the first timeslot or subframe, and the 11 symbols are completely different from or partially the same as the one symbol in the first timeslot or subframe; or
the first-format uplink control channel occupies 13 symbols of the first timeslot or subframe, the second-format uplink control channel occupies one symbol of the first timeslot or subframe, and the 13 symbols are completely different from or partially the same as the one symbol in the first timeslot or subframe; or
the first-format uplink control channel occupies six symbols of the first timeslot or subframe, the second-format uplink control channel occupies one symbol of the first timeslot or subframe, and the six symbols are completely different from or partially the same as the one symbol in the first timeslot or subframe; or
the first-format uplink control channel occupies four symbols of the first timeslot or subframe, the second-format uplink control channel occupies one symbol of the first timeslot or subframe, and the four symbols are completely different from or partially the same as the one symbol in the first timeslot or subframe; or
the first-format uplink control channel occupies three symbols of the first timeslot or subframe, the second-format uplink control channel occupies one symbol of the first timeslot or subframe, and the three symbols are completely different from or partially the same as the one symbol in the first timeslot or subframe.

In a feasible design, the at least one first-format uplink control channel is specifically one first-format uplink control channel, the at least one second-format uplink control channel is specifically four second-format uplink control channels, the first-format uplink control channel occupies seven symbols of the first timeslot or subframe, each of the four second-format uplink control channels occupies one symbol of the first timeslot or subframe, and the seven symbols are completely different from or partially the same as the one symbol in the first timeslot or subframe; or
the at least one first-format uplink control channel is specifically one first-format uplink control channel, the at least one second-format uplink control channel is specifically five second-format uplink control channels, the first-format uplink control channel occupies seven symbols of the first timeslot or subframe, each of the five second-format uplink control channels occupies one symbol of the first timeslot or subframe, and the seven symbols are completely different from or partially the same as the one symbol in the first timeslot or subframe.

In a feasible design, the at least one first-format uplink control channel is specifically one first-format uplink control channel, the at least one second-format uplink control channel is specifically one second-format uplink control channel, the at least one third-format uplink control channel is specifically one third-format uplink control channel, the first-format uplink control channel occupies seven symbols of the first timeslot or subframe, the second-format uplink control channel occupies four symbols of the first timeslot or subframe, the third-format uplink control channel occupies one symbol of the first timeslot or subframe, and the seven symbols, the four symbols, and the one symbol are completely different or partially the same in the first timeslot or subframe.

According to a second aspect, an embodiment of this application provides an uplink control channel transmission apparatus, including:
a processing module, configured to generate a first timeslot or subframe including at least one first-format uplink control channel and at least one second-format uplink control channel, where the first-format uplink control channel occupies N symbols of the first timeslot or subframe, the second-format uplink control channel occupies M symbols of the first timeslot or subframe, and N is greater than or equal to M; and
a transceiver module, configured to transmit the first timeslot or subframe.

In a feasible design, a symbol occupied by at least one of the at least one first-format uplink control channel is completely different from or partially the same as a symbol occupied by at least one of the at least one second-format uplink control channel.

In a feasible design, at least one of the at least one first-format uplink control channel occupies a first frequency resource, at least one of the at least one second-format uplink control channel occupies a second frequency resource, and the first frequency resource is completely different from or partially the same as the second frequency resource.

In a feasible design, the first frequency resource occupies two ends of a system frequency band, and the second frequency resource occupies all or a part of the system frequency band, or the second frequency occupies a part of the system frequency band except the first frequency resource.

In a feasible design, the first timeslot or subframe further includes at least one third-format uplink control channel; and
a symbol occupied by at least one of the at least one third-format uplink control channel is completely different from or partially the same as the symbol occupied by the at least one of the at least one first-format uplink control channel; or a symbol occupied by at least one of the at least one third-format uplink control channel is completely different from or partially the same as the symbol occupied by the at least one of the at least one second-format uplink control channel.

In a feasible design, the at least one of the at least one first-format uplink control channel occupies the first frequency resource, the at least one of the at least one second-format uplink control channel occupies the second frequency resource, the at least one third-format uplink control channel of the at least one third-format uplink control channel format occupies a third frequency resource, and the first frequency resource is completely different from or partially the same as the second frequency resource; and
the third frequency resource is completely different from or partially the same as the first frequency resource, or the third frequency resource is completely different from or partially the same as the second frequency resource.

In a feasible design, the third frequency occupies all or a part of the system frequency band, or the third frequency occupies a part of the system frequency band except the first frequency resource and the second frequency resource.

In a feasible design, the first-format uplink control channel, the second-format uplink control channel, or the third-format uplink control channel occupies at least two parts of frequency resources, and at least two of the at least two parts of frequency resources are different.

In a feasible design, the at least one first-format uplink control channel is specifically one first-format uplink control channel, and the at least one second-format uplink control channel is specifically one second-format uplink control channel, where
the first-format uplink control channel occupies seven symbols of the first timeslot or subframe, the second-format uplink control channel occupies four symbols of the first timeslot or subframe, and the seven symbols are completely different from or partially the same as the four symbols in the first timeslot or subframe; or
the first-format uplink control channel occupies 10 symbols of the first timeslot or subframe, the second-format uplink control channel occupies one symbol of the first timeslot or subframe, and the 10 symbols are completely different from or partially the same as the one symbol in the first timeslot or subframe; or
the first-format uplink control channel occupies 11 symbols of the first timeslot or subframe, the second-format uplink control channel occupies one symbol of the first timeslot or subframe, and the 11 symbols are completely different from or partially the same as the one symbol in the first timeslot or subframe; or
the first-format uplink control channel occupies 13 symbols of the first timeslot or subframe, the second-format uplink control channel occupies one symbol of the first timeslot or subframe, and the 13 symbols are completely different from or partially the same as the one symbol in the first timeslot or subframe; or
the first-format uplink control channel occupies six symbols of the first timeslot or subframe, the second-format uplink control channel occupies one symbol of the first timeslot or subframe, and the six symbols are completely different from or partially the same as the one symbol in the first timeslot or subframe; or
the first-format uplink control channel occupies four symbols of the first timeslot or subframe, the second-format uplink control channel occupies one symbol of the first timeslot or subframe, and the four symbols are completely different from or partially the same as the one symbol in the first timeslot or subframe; or
the first-format uplink control channel occupies three symbols of the first timeslot or subframe, the second-format uplink control channel occupies one symbol of the first timeslot or subframe, and the three symbols are completely different from or partially the same as the one symbol in the first timeslot or subframe.

In a feasible design, the at least one first-format uplink control channel is specifically one first-format uplink control channel, the at least one second-format uplink control channel is specifically four second-format uplink control channels, the first-format uplink control channel occupies seven symbols of the first timeslot or subframe, each of the four second-format uplink control channels occupies one symbol of the first timeslot or subframe, and the seven symbols are completely different from or partially the same as the one symbol in the first timeslot or subframe; or
the at least one first-format uplink control channel is specifically one first-format uplink control channel, the at least one second-format uplink control channel is specifically five second-format uplink control channels, the first-format uplink control channel occupies seven symbols of the first timeslot or subframe, each of the five second-format uplink control channels occupies one symbol of the first timeslot or subframe, and the seven symbols are completely different from or partially the same as the one symbol in the first timeslot or subframe.

In a feasible design, the at least one first-format uplink control channel is specifically one first-format uplink control channel, the at least one second-format uplink control channel is specifically one second-format uplink control channel, the at least one third-format uplink control channel is specifically one third-format uplink control channel, the first-format uplink control channel occupies seven symbols of the first timeslot or subframe, the second-format uplink control channel occupies four symbols of the first timeslot or subframe, the third-format uplink control channel occupies one symbol of the first timeslot or subframe, and the seven symbols, the four symbols, and the one symbol are completely different or partially the same in the first timeslot or subframe.

According to a third aspect, an embodiment of this application provides an uplink control channel transmission apparatus, including a processor, a memory, a communications interface, and a system bus, where the memory and the communications interface are connected to the processor by using the system bus, to complete communication with each other; the memory is configured to store a computer executable instruction; the communications interface is configured to communicate with another device; and the processor is configured to run the computer executable instruction, so that the uplink control channel transmission apparatus performs all steps of the method applied to the uplink control channel transmission apparatus.

According to a fourth aspect, an embodiment of this application provides an uplink control channel transmission apparatus, including a processor, a memory, a communications interface, and a system bus, where the memory and the communications interface are connected to the processor by using the system bus, to complete communication with each other; the memory is configured to store a computer executable instruction; the communications interface is configured to communicate with another device; and the processor is configured to run the computer executable instruction, so that the uplink control channel transmission apparatus performs all steps of the method applied to the uplink control channel transmission apparatus.

According to a fifth aspect, an embodiment of this application provides a computer storage medium, configured to store a computer software instruction used by the foregoing uplink control channel transmission apparatus, where the computer software instruction includes a program designed for executing the first aspect or the feasible implementations of the first aspect.

According to a sixth aspect, an embodiment of this application provides a chip system, including at least one processor, a memory, an input/output part, and a bus, where the at least one processor obtains an instruction from the memory by using the bus, to implement a design function of the uplink control channel transmission apparatus used in the foregoing method.

According to a seventh aspect, an embodiment of this application provides an uplink control channel transmission apparatus, including a memory and a processor, where the memory is configured to store a program instruction, and the processor is configured to call the program instruction in the memory, to implement a function of the uplink control channel transmission apparatus in the foregoing method embodiments.

According to the uplink control channel transmission method and apparatus provided in the embodiments of this application, the at least one first-format uplink control channel and the at least one second-format uplink control channel are added to the first timeslot or subframe, and then the first timeslot or subframe including the at least one first-format uplink control channel and the at least one second-format uplink control channel is transmitted. In the process, there are only two formats of uplink control channels, so that uplink scheduling complexity is reduced.

### BRIEF DESCRIPTION OF DRAWINGS

FIG. 1A is a schematic structural diagram of a subframe used to carry an uplink control channel in future 5G;
FIG. 1B is a schematic diagram of an uplink transmission resource in a UL domain timeslot or subframe and a UL only timeslot or subframe;
FIG. 2 is a flowchart of Embodiment 1 of an uplink control channel transmission method according to this application;
FIG. 3A is a schematic diagram of a first-format uplink control channel and a second-format uplink control channel in Embodiment 2 of an uplink control channel transmission method according to this application;
FIG. 3B is another schematic diagram of a first-format uplink control channel and a second-format uplink control channel in Embodiment 2 of an uplink control channel transmission method according to this application;
FIG. 4A is a schematic diagram of a first-format uplink control channel and a second-format uplink control channel in Embodiment 3 of an uplink control channel transmission method according to this application;
FIG. 4B is another schematic diagram of a first-format uplink control channel and a second-format uplink control channel in Embodiment 3 of an uplink control channel transmission method according to this application;
FIG. 5A is a schematic diagram of a first-format uplink control channel and a second-format uplink control channel in Embodiment 4 of an uplink control channel transmission method according to this application;
FIG. 5B is another schematic diagram of a first-format uplink control channel and a second-format uplink control channel in Embodiment 4 of an uplink control channel transmission method according to this application;
FIG. 6A is a schematic diagram of a first-format uplink control channel and a second-format uplink control channel in Embodiment 5 of an uplink control channel transmission method according to this application;
FIG. 6B is another schematic diagram of a first-format uplink control channel and a second-format uplink control channel in Embodiment 5 of an uplink control channel transmission method according to this application;
FIG. 7A is a schematic diagram of a first-format uplink control channel and a second-format uplink control channel in Embodiment 6 of an uplink control channel transmission method according to this application;
FIG. 7B is another schematic diagram of a first-format uplink control channel and a second-format uplink control channel in Embodiment 6 of an uplink control channel transmission method according to this application;
FIG. 8A is a schematic diagram of a first-format uplink control channel and a second-format uplink control channel in Embodiment 7 of an uplink control channel transmission method according to this application;
FIG. 8B is another schematic diagram of a first-format uplink control channel and a second-format uplink control channel in Embodiment 7 of an uplink control channel transmission method according to this application;
FIG. 9A is a schematic diagram of a first-format uplink control channel and a second-format uplink control channel in Embodiment 8 of an uplink control channel transmission method according to this application;
FIG. 9B is another schematic diagram of a first-format uplink control channel and a second-format uplink control channel in Embodiment 8 of an uplink control channel transmission method according to this application;
FIG. 10A is a schematic diagram of a first-format uplink control channel and a second-format uplink control channel in Embodiment 9 of an uplink control channel transmission method according to this application;
FIG. 10B is another schematic diagram of a first-format uplink control channel and a second-format uplink control channel in Embodiment 9 of an uplink control channel transmission method according to this application;
FIG. 11A is a schematic diagram of a first-format uplink control channel and a second-format uplink control channel in Embodiment 10 of an uplink control channel transmission method according to this application;
FIG. 11B is another schematic diagram of a first-format uplink control channel and a second-format uplink control channel in Embodiment 10 of an uplink control channel transmission method according to this application;
FIG. 12A is a schematic diagram of a first-format uplink control channel, a second-format uplink control channel, and a third-format uplink control channel in Embodiment 11 of an uplink control channel transmission method according to this application;
FIG. 12B is another schematic diagram of a first-format uplink control channel, a second-format uplink control channel, and a third-format uplink control channel in Embodiment 11 of an uplink control channel transmission method according to this application;
FIG. 13 is a schematic diagram of different formats of uplink control channels in Embodiment 12 of an uplink control channel transmission method according to this application;
FIG. 14 is a schematic diagram of different formats of uplink control channels in Embodiment 13 of an uplink control channel transmission method according to this application;
FIG. 15A is a schematic diagram of different formats of uplink control channels in Embodiment 14 of an uplink control channel transmission method according to this application;
FIG. 15B is another schematic diagram of different formats of uplink control channels in Embodiment 14 of an uplink control channel transmission method according to this application;
FIG. 16 is a schematic diagram of different formats of uplink control channels in Embodiment 15 of an uplink control channel transmission method according to this application;
FIG. 17A is a schematic diagram of different formats of uplink control channels in Embodiment 16 of an uplink control channel transmission method according to this application;
FIG. 17B is another schematic diagram of different formats of uplink control channels in Embodiment 16 of an uplink control channel transmission method according to this application;
FIG. 18 is a schematic structural diagram of Embodiment 1 of an uplink control channel transmission apparatus according to this application; and
FIG. 19 is a schematic structural diagram of Embodiment 2 of an uplink control channel transmission apparatus according to this application.

### DESCRIPTION OF EMBODIMENTS

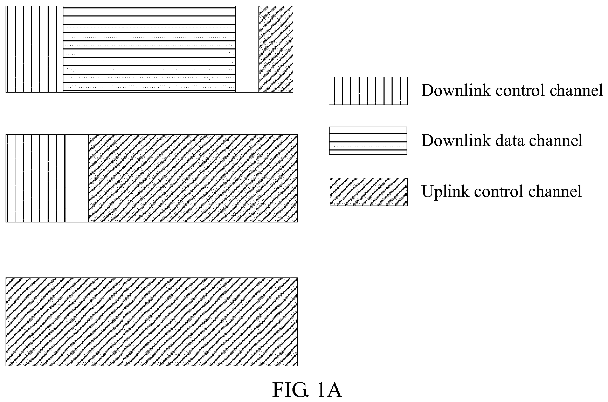

FIG. 1A is a schematic structural diagram of a sub frame used to carry an uplink control channel in future 5G. FIG. 1A shows a DL domain timeslot or sub frame, a UL domain timeslot or subframe, and a UL only timeslot or subframe sequentially from top to bottom. A part filled with vertical lines represents a resource used to transmit a downlink control channel; a part filled with horizontal lines represents a resource used to transmit a downlink data channel; an unfilled part represents a gap, which usually occupies one symbol; and a part filled with slashes represents an uplink transmission resource. It can be learned from FIG. 1A that last one or two symbols of the DL domain timeslot or subframe is/are an uplink transmission resource, and is/are mainly used to transmit a short duration UL control channel; first two or three symbols of the UL domain timeslot or subframe are a downlink transmission resource and a gap (Gap), and remaining symbols are an uplink transmission resource; and all symbols of the UL only timeslot or subframe are an uplink transmission resource.

The UL domain timeslot or subframe can be used to transmit a short duration UL control channel and a long duration UL control channel. Therefore, an uplink control channel is carried by using the UL domain timeslot or subframe, and a quantity of symbols of the uplink control channel is variable. Consequently, the UL domain timeslot or subframe may include a plurality of formats of uplink control channels. Likewise, the UL only timeslot or subframe may also include a plurality of formats of uplink control channels.

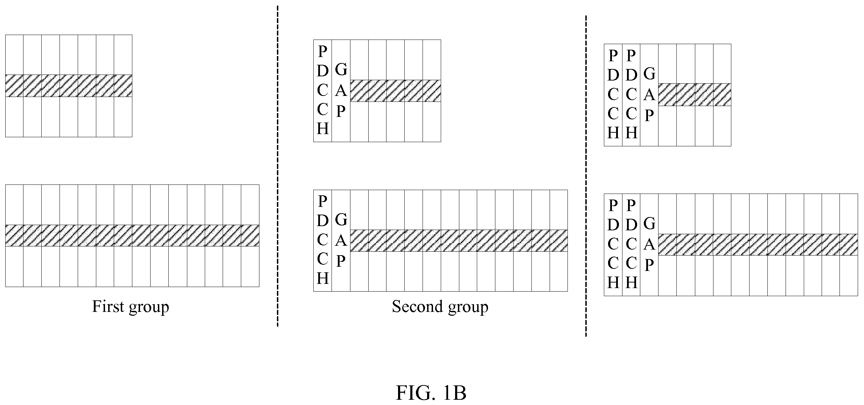

Further, in 5G, sub frames of a same type may include different quantities of symbols. For example, the UL domain timeslot or subframe may be a UL domain timeslot or subframe including seven symbols or a UL domain timeslot or subframe including 14 symbols. Therefore, based on the quantities of symbols included in the UL domain timeslot or subframe, the UL domain timeslot or subframe may include a relatively large quantity of formats of uplink control channels. Likewise, based on quantities of symbols included in the UL only timeslot or subframe, the UL only timeslot or subframe may include a relatively large quantity of formats of uplink control channels. Specifically, FIG. 1B is a schematic diagram of an uplink transmission resource in a UL domain timeslot or subframe and a UL only timeslot or subframe.

Referring to FIG. 1B, a first group includes UL only timeslots or subframes, a second group includes UL domain timeslots or subframes, and a third group also includes UL domain timeslots or subframes. In each subframe group, an upper part is a subframe including seven symbols, and a lower part is a subframe including 14 symbols. All symbols in the first group are an uplink transmission resource. First two symbols in the second group are symbols respectively occupied by a physical downlink control channel (Physical Downlink Control Channel, PDCCH) and a gap, and symbols following the first two symbols are an uplink transmission resource. First two symbols in the third group are symbols occupied by PDCCHs, a third symbol is a symbol occupied by a gap, and remaining symbols are an uplink transmission resource. The uplink transmission resource is marked by using parts filled with slashes in the figure.

The second group is used as an example. When a UL domain timeslot or subframe is a subframe including seven symbols, a short duration UL control channel may occupy symbols of different quantities or at different locations, and a long duration UL control channel may occupy symbols of different quantities or at different locations. Therefore, a system includes various formats of uplink control channels. When a UL domain timeslot or subframe is a subframe including 14 symbols, a short duration UL control channel may occupy symbols of different quantities or at different locations, and a long duration UL control channel may occupy symbols of different quantities or at different locations. Therefore, the system also includes various formats of uplink control channels.

It can be learned from the foregoing that if uplink control channels are carried by using different types of subframes, there are a plurality of formats of uplink control channels. This increases complexity of scheduling an uplink control channel.

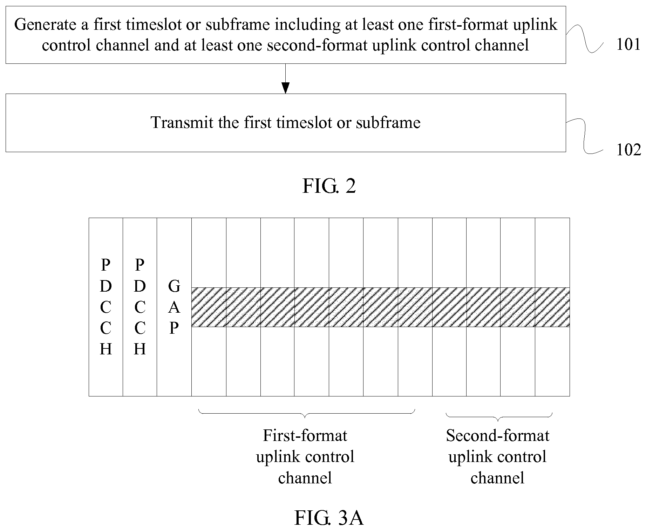

FIG. 2 is a flowchart of Embodiment 1 of an uplink control channel transmission method according to this application. The method includes the following steps.

101. Generate a first timeslot or subframe including at least one first-format uplink control channel and at least one second-format uplink control channel.

This embodiment of this application is executed by a transmission apparatus. The transmission apparatus may be integrated on a terminal, and is configured to: in uplink control channel transmission, generate uplink control channels in various formats and transmit the uplink control channels to a network side device.

In this embodiment of this application, the first timeslot and the first subframe are used to describe a same time domain resource, and are two different names of the same time domain resource. It should be understood that, in the embodiments of this application, the first timeslot and subframe may represent a UL domain timeslot or subframe or a UL only timeslot or subframe. This is not specifically limited.

In the step, the transmission apparatus adds the first-format uplink control channel and the second-format uplink control channel to the first timeslot or subframe, and there are one or more first-format uplink control channels and one or more second-format uplink control channels. The first-format uplink control channel occupies N symbols, and the second-format uplink control channel occupies M symbols, where N≥M. For example, when the first-format uplink control channel is a long duration UL control channel and the second-format uplink control channel is a short duration UL control channel, N>M. For another example, when the first-format uplink control channel is a long duration UL control channel, and the second-format uplink control channel is also a long duration UL control channel, N≥M.

It should be noted that in this embodiment, formats of uplink control channels are differentiated by using quantities of occupied symbols. In other words, uplink control channels in different formats may occupy different quantities of symbols.

102. Transmit the first timeslot or subframe.

The transmission apparatus transmits, to the network side device, the first timeslot or subframe including the at least one first-format uplink control channel and the at least one second-format uplink control channel.

According to the uplink control channel transmission method provided in this embodiment of this application, the at least one first-format uplink control channel and the at least one second-format uplink control channel are added to the first timeslot or subframe, and then the first timeslot or subframe including the at least one first-format uplink control channel and the at least one second-format uplink control channel is transmitted. In the process, there are only two formats of uplink control channels, so that uplink scheduling complexity is reduced.

Optionally, from a perspective of a time domain resource, in an embodiment of this application, a symbol occupied by at least one of the at least one first-format uplink control channel is completely different from or partially the same as a symbol occupied by at least one of the at least one second-format uplink control channel.

In the method, flexible configuration of a time domain resource occupied by uplink control channels in two different formats is implemented.

Optionally, from a perspective of a frequency domain resource, in an embodiment of this application, at least one of the at least one first-format uplink control channel occupies a first frequency resource, at least one of the at least one second-format uplink control channel occupies a second frequency resource, and the first frequency resource is completely different from or partially the same as the second frequency resource.

Specifically, in frequency domain, the first-format uplink control channel occupies the first frequency resource, and the second-format uplink control channel occupies the second frequency resource. The first frequency resource may be completely different from the second frequency resource, the first frequency resource and the second frequency resource may be a same frequency resource, or there is a same part between the first frequency resource and the second frequency resource.

Further, optionally, the first frequency resource occupies two ends of a system frequency band, and the second frequency occupies all or a part of the system frequency band, or the second frequency occupies a part of the system frequency band except the first frequency resource.

In the method, flexible configuration of a frequency resource occupied by uplink control channels in two different formats is implemented.

Optionally, for the transmission apparatus, in addition to the first-format uplink control channel and the second-format uplink control channel, the first timeslot or subframe may further include at least one third-format uplink control channel, and then the at least one third-format uplink control channel is transmitted. A symbol occupied by at least one of the at least one third-format uplink control channel is completely different from or partially the same as the symbol occupied by the at least one of the at least one first-format uplink control channel, or a symbol occupied by at least one of the at least one third-format uplink control channel is completely different from or partially the same as the symbol occupied by the at least one of the at least one second-format uplink control channel.

Specifically, the first-format uplink control channel, the second-format uplink control channel, and the third-format uplink control channel respectively occupy different time domain resources, or a time domain resource occupied by the third-format uplink control channel overlaps partially a time domain resource occupied by the first-format uplink control channel, or a time domain resource occupied by the third-format uplink control channel overlaps partially a time domain resource occupied by the second-format uplink control channel.

In the method, there are only three formats of uplink control channels, so that uplink scheduling complexity is reduced, and flexible configuration of a time domain resource occupied by the uplink control channels in the three different formats is implemented.

Further, optionally, the at least one of the at least one first-format uplink control channel occupies the first frequency resource, the at least one of the at least one second-format uplink control channel occupies the second frequency resource, the at least one third-format uplink control channel of the at least one third-format uplink control channel format occupies a third frequency resource. The first frequency resource is completely different from or partially the same as the second frequency resource; and the third frequency resource is completely different from or partially the same as the first frequency resource, or the third frequency resource is completely different from or partially the same as the second frequency resource. For example, the third frequency occupies all or a part of the system frequency band, or the third frequency occupies a part of the system frequency band except the first frequency resource and the second frequency resource.

Optionally, the first-format uplink control channel, the second-format uplink control channel, or the third-format uplink control channel occupies at least two parts of frequency resources, and at least two of the at least two parts of frequency resources are different.

Specifically, when the first-format uplink control channel, the second-format uplink control channel, or the third-format uplink control channel occupies two parts of frequency resources, the two parts of frequency resources are different frequency resources. For example, one of the two parts of frequency resources occupies one end of the system frequency band, and the other of the two parts occupies the other end of the system frequency band, so that frequency diversity gains are implemented.

The following uses an example in which one first-format uplink control channel and one second-format uplink control channel are added to the first timeslot or subframe, to describe in detail the uplink control channel transmission method.

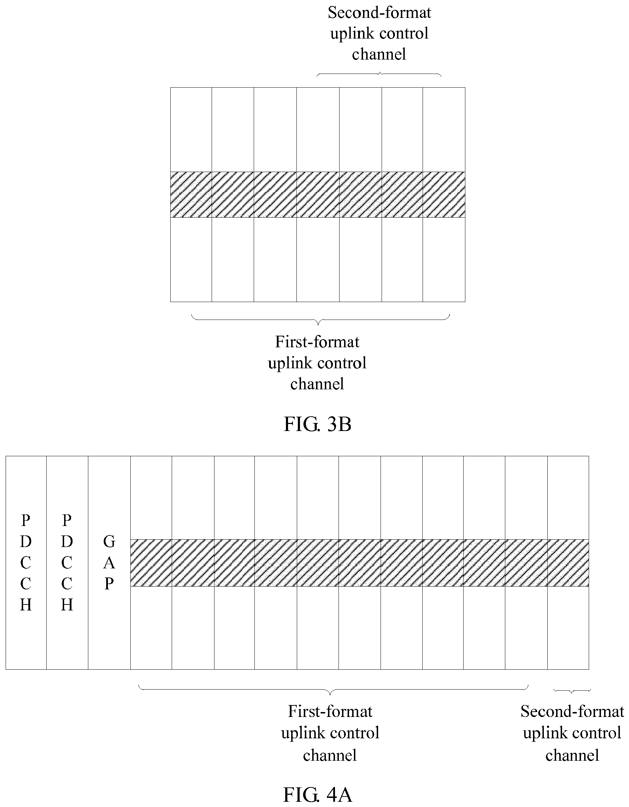

For example, the first-format uplink control channel occupies seven symbols of the first timeslot or subframe, the second-format uplink control channel occupies four symbols of the first timeslot or subframe, and the seven symbols are completely different from or partially the same as the four symbols in the first timeslot or subframe. For details, refer to FIG. 3A and FIG. 3B. FIG. 3A is a schematic diagram of a first-format uplink control channel and a second-format uplink control channel in Embodiment 2 of an uplink control channel transmission method according to this application. FIG. 3B is another schematic diagram of a first-format uplink control channel and a second-format uplink control channel in Embodiment 2 of an uplink control channel transmission method according to this application.

Referring to FIG. 3A, the first timeslot or subframe is a UL domain timeslot or subframe including 14 symbols. First three symbols of the first timeslot or subframe are a downlink transmission resource and a gap (Gap), and remaining 11 symbols are an uplink transmission resource. The first timeslot or subframe includes one first-format uplink control channel and one second-format uplink control channel. The first-format uplink control channel occupies seven symbols following the gap, and the second-format uplink control channel occupies remaining four symbols. In this case, the symbols occupied by the first-format uplink control channel are completely different from the symbols occupied by the second-format uplink control channel.

Referring to FIG. 3B, the first timeslot or subframe is a UL only timeslot or subframe including seven symbols, and the seven symbols are an uplink transmission resource. The first timeslot or subframe includes one first-format uplink control channel occupying seven symbols following a gap, and the second-format uplink control channel occupies four symbols. The four symbols are four of the seven symbols occupied by the first-format uplink control channel. In this case, the symbols occupied by the first-format uplink control channel are partially the same as the symbols occupied by the second-format uplink control channel.

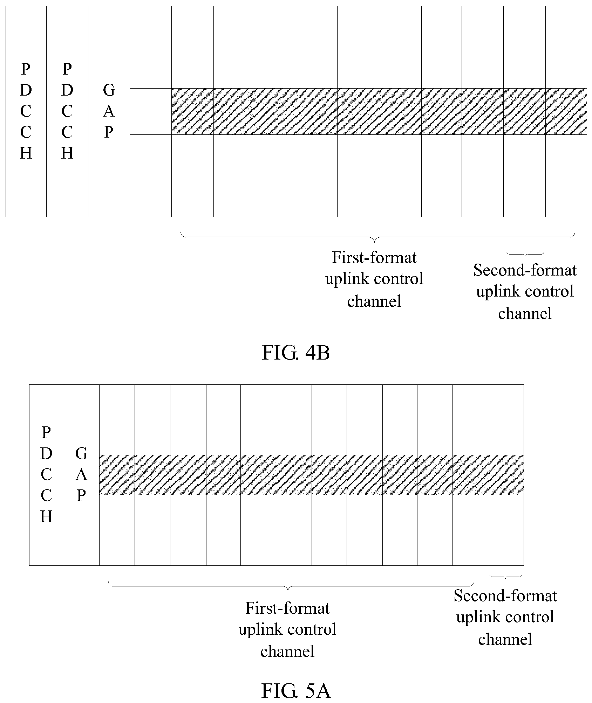

For another example, the first-format uplink control channel occupies 10 symbols of the first timeslot or subframe, the second-format uplink control channel occupies one symbol of the first timeslot or subframe, and the 10 symbols are completely different from or partially the same as the one symbol in the first timeslot or subframe. For details, refer to FIG. 4A and FIG. 4B. FIG. 4A is a schematic diagram of a first-format uplink control channel and a second-format uplink control channel in Embodiment 3 of an uplink control channel transmission method according to this application. FIG. 4B is another schematic diagram of a first-format uplink control channel and a second-format uplink control channel in Embodiment 3 of an uplink control channel transmission method according to this application.

Referring to FIG. 4A, the first timeslot or subframe is a UL domain timeslot or subframe including 14 symbols. First three symbols of the first timeslot are a downlink transmission resource and a gap (Gap), and remaining 11 symbols are an uplink transmission resource. The first timeslot or subframe includes one first-format uplink control channel and one second-format uplink control channel. The first-format uplink control channel occupies 10 symbols following the gap, and the second-format uplink control channel occupies remaining one symbol. In this case, the symbols occupied by the first-format uplink control channel are completely different from the symbol occupied by the second-format uplink control channel.

Referring to FIG. 4B, a first symbol following a gap is used for a data channel, the first-format uplink control channel occupies 10 symbols starting with a second symbol following the gap, the second-format uplink control channel occupies one symbol, and the one symbol is any one of the 10 symbols occupied by the first-format uplink control channel. In this case, the symbols occupied by the first-format uplink control channel are partially the same as the symbol occupied by the second-format uplink control channel.

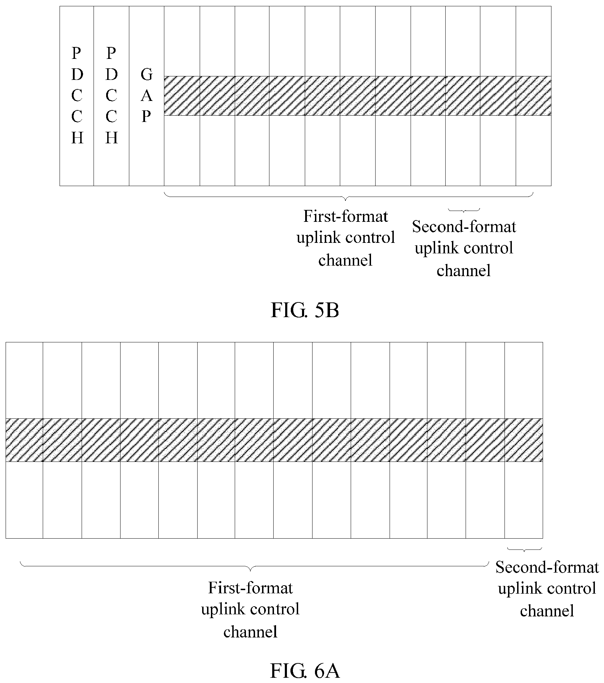

For another example, the first-format uplink control channel occupies 11 symbols of the first timeslot or subframe, the second-format uplink control channel occupies one symbol of the first timeslot or subframe, and the 11 symbols are completely different from or partially the same as the one symbol in the first timeslot or subframe. For details, refer to FIG. 5A and FIG. 5B. FIG. 5A is a schematic diagram of a first-format uplink control channel and a second-format uplink control channel in Embodiment 4 of an uplink control channel transmission method according to this application. FIG. 5B is another schematic diagram of a first-format uplink control channel and a second-format uplink control channel in Embodiment 4 of an uplink control channel transmission method according to this application.

Referring to FIG. 5A, the first timeslot or subframe is a UL domain timeslot or subframe including 14 symbols. First two symbols of the first timeslot or subframe are a downlink transmission resource and a gap (Gap), and remaining 12 symbols are an uplink transmission resource. The first timeslot or subframe includes one first-format uplink control channel and one second-format uplink control channel. The first-format uplink control channel occupies 11 symbols following the gap, and the second-format uplink control channel occupies remaining one symbol. In this case, the symbols occupied by the first-format uplink control channel are completely different from the symbol occupied by the second-format uplink control channel. Referring to FIG. 5B, the first timeslot or subframe is a UL domain timeslot or subframe including 14 symbols. First three symbols of the first timeslot or subframe are a downlink transmission resource and a gap (Gap), and remaining 11 symbols are an uplink transmission resource. The first-format uplink control channel occupies 11 symbols following the gap, and the second-format uplink control channel occupies one symbol. The one symbol is any one of the 11 symbols occupied by the first-format uplink control channel. In this case, the symbols occupied by the first-format uplink control channel are partially the same as the symbol occupied by the second-format uplink control channel.

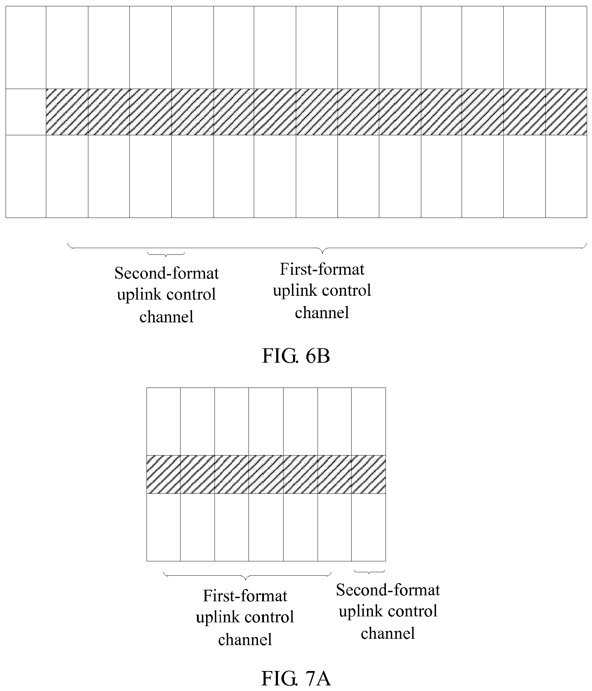

For another example, the first-format uplink control channel occupies 13 symbols of the first timeslot or subframe, the second-format uplink control channel occupies one symbol of the first timeslot or subframe, and the 13 symbols are completely different from or partially the same as the one symbol in the first timeslot or subframe. For details, refer to FIG. 6A and FIG. 6B. FIG. 6A is a schematic diagram of a first-format uplink control channel and a second-format uplink control channel in Embodiment 5 of an uplink control channel transmission method according to this application. FIG. 6B is another schematic diagram of a first-format uplink control channel and a second-format uplink control channel in Embodiment 5 of an uplink control channel transmission method according to this application.

Referring to FIG. 6A, the first timeslot or subframe is a UL only timeslot or subframe including 14 symbols, and the 14 symbols are an uplink transmission resource. The first timeslot or subframe includes one first-format uplink control channel and one second-format uplink control channel. The first-format uplink control channel occupies 13 symbols, and the second-format uplink control channel occupies remaining one symbol. In this case, the symbols occupied by the first-format uplink control channel are completely different from the symbol occupied by the second-format uplink control channel.

Referring to FIG. 6B, a first symbol is used for a data channel, the first-format uplink control channel occupies remaining 13 symbols, the second-format uplink control channel occupies one symbol, and the one symbol is any one of the 13 symbols occupied by the first-format uplink control channel. In this case, the symbols occupied by the first-format uplink control channel are partially the same as the symbol occupied by the second-format uplink control channel.

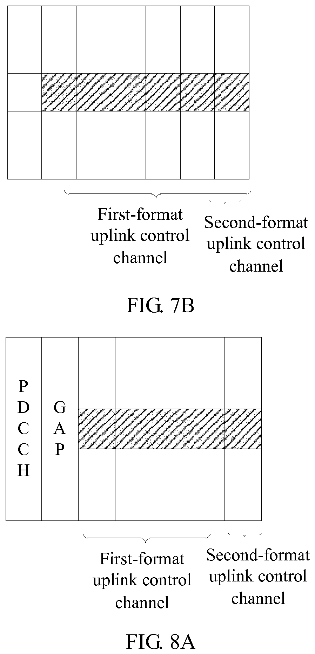

For another example, the first-format uplink control channel occupies six symbols of the first timeslot or subframe, the second-format uplink control channel occupies one symbol of the first timeslot or subframe, and the six symbols are completely different from or partially the same as the one symbol in the first timeslot or subframe. For details, refer to FIG. 7A and FIG. 7B. FIG. 7A is a schematic diagram of a first-format uplink control channel and a second-format uplink control channel in Embodiment 6 of an uplink control channel transmission method according to this application. FIG. 7B is another schematic diagram of a first-format uplink control channel and a second-format uplink control channel in Embodiment 6 of an uplink control channel transmission method according to this application.

Referring to FIG. 7A, the first timeslot or subframe is a UL only timeslot or subframe including seven symbols, and the seven symbols are an uplink transmission resource. The first timeslot or subframe includes one first-format uplink control channel and one second-format uplink control channel. The first-format uplink control channel occupies six symbols, and the second-format uplink control channel occupies remaining one symbol. In this case, the symbols occupied by the first-format uplink control channel are completely different from the symbol occupied by the second-format uplink control channel.

Referring to FIG. 7B, a first symbol is used for a data channel, the first-format uplink control channel occupies remaining six symbols, the second-format uplink control channel occupies one symbol, and the one symbol is any one of the six symbols occupied by the first-format uplink control channel. In this case, the symbols occupied by the first-format uplink control channel are partially the same as the symbol occupied by the second-format uplink control channel.

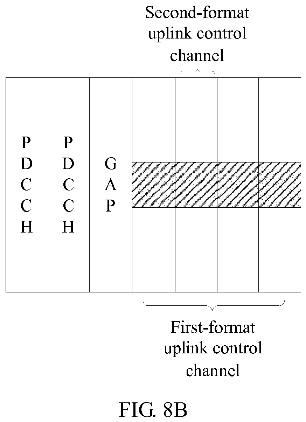

For another example, the first-format uplink control channel occupies four symbols of the first timeslot or subframe, the second-format uplink control channel occupies one symbol of the first timeslot or subframe, and the four symbols are completely different from or partially the same as the one symbol in the first timeslot or subframe. For details, refer to FIG. 8A and FIG. 8B. FIG. 8A is a schematic diagram of a first-format uplink control channel and a second-format uplink control channel in Embodiment 7 of an uplink control channel transmission method according to this application. FIG. 8B is another schematic diagram of a first-format uplink control channel and a second-format uplink control channel in Embodiment 7 of an uplink control channel transmission method according to this application.

Referring to FIG. 8A, the first timeslot or subframe is a UL domain timeslot or subframe including seven symbols. First two symbols of the first timeslot are a downlink transmission resource and a gap (Gap), and remaining five symbols are an uplink transmission resource. The first timeslot or subframe includes one first-format uplink control channel and one second-format uplink control channel. The first-format uplink control channel occupies four symbols following the gap, and the second-format uplink control channel occupies remaining one symbol. In this case, the symbols occupied by the first-format uplink control channel are completely different from the symbol occupied by the second-format uplink control channel.

Referring to FIG. 8B, the first timeslot or subframe is a UL domain timeslot or subframe including seven symbols. First three symbols of the first timeslot or subframe are a downlink transmission resource and a gap (Gap), and remaining four symbols are an uplink transmission resource. The first-format uplink control channel occupies four symbols following the gap, the second-format uplink control channel occupies one symbol, and the one symbol is any one of the four symbols occupied by the first-format uplink control channel. In this case, the symbols occupied by the first-format uplink control channel are partially the same as the symbol occupied by the second-format uplink control channel.

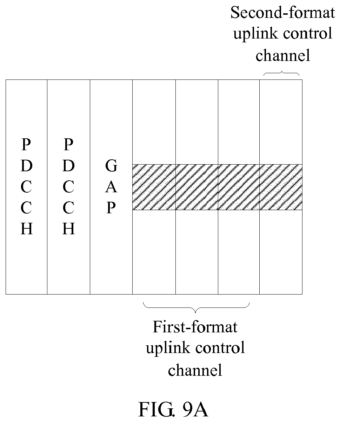

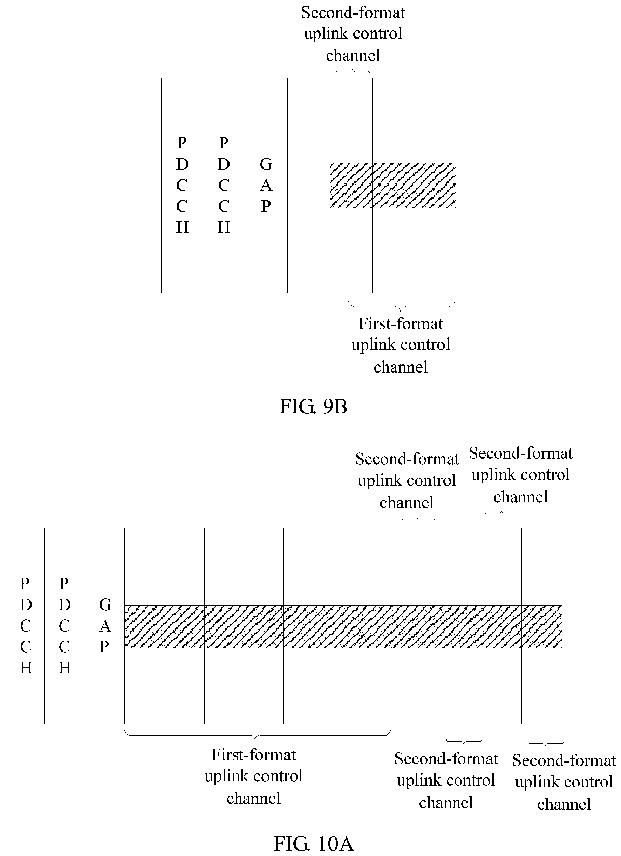

For another example, the first-format uplink control channel occupies three symbols of the first timeslot or subframe, the second-format uplink control channel occupies one symbol of the first timeslot or subframe, and the three symbols are completely different from or partially the same as the one symbol in the first timeslot or subframe. For details, refer to FIG. 9A and FIG. 9B. FIG. 9A is a schematic diagram of a first-format uplink control channel and a second-format uplink control channel in Embodiment 8 of an uplink control channel transmission method according to this application. FIG. 9B is another schematic diagram of a first-format uplink control channel and a second-format uplink control channel in Embodiment 8 of an uplink control channel transmission method according to this application.

Referring to FIG. 9A, the first timeslot or subframe is a UL domain timeslot or subframe including seven symbols. First three symbols of the first timeslot or subframe are a downlink transmission resource and a gap (Gap), and remaining four symbols are an uplink transmission resource. The first timeslot or subframe includes one first-format uplink control channel and one second-format uplink control channel. The first-format uplink control channel occupies three symbols following the gap, and the second-format uplink control channel occupies remaining one symbol. In this case, the symbols occupied by the first-format uplink control channel are completely different from the symbol occupied by the second-format uplink control channel.

Referring to FIG. 9B, a first symbol following a gap is used for a data channel, the first-format uplink control channel occupies remaining three symbols following the gap, the second-format uplink control channel occupies one symbol, and the one symbol is any one of the three symbols occupied by the first-format uplink control channel. In this case, the symbols occupied by the first-format uplink control channel are partially the same as the symbol occupied by the second-format uplink control channel.

In the method, flexible configuration of a time domain resource occupied by uplink control channels in two different formats is implemented.

The following uses an example in which one first-format uplink control channel and a plurality of second-format uplink control channels are added to a first timeslot or subframe, to describe in detail the uplink control channel transmission method.

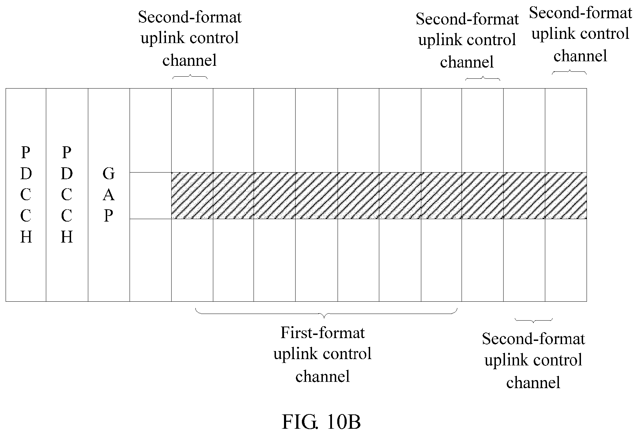

For example, the at least one first-format uplink control channel is specifically one first-format uplink control channel, the at least one second-format uplink control channel is specifically four second-format uplink control channels, the first-format uplink control channel occupies seven symbols of the first timeslot or subframe, each of the four second-format uplink control channels occupies one symbol of the first timeslot or subframe, and the seven symbols are completely different from or partially the same as the one symbol in the first timeslot or subframe. For details, refer to FIG. 10A and FIG. 10B. FIG. 10A is a schematic diagram of a first-format uplink control channel and a second-format uplink control channel in Embodiment 9 of an uplink control channel transmission method according to this application. FIG. 10B is another schematic diagram of a first-format uplink control channel and a second-format uplink control channel in Embodiment 9 of an uplink control channel transmission method according to this application.

Referring to FIG. 10A, the first timeslot or subframe is a UL domain timeslot or subframe including 14 symbols. First three symbols of the first timeslot are a downlink transmission resource and a gap (Gap), and remaining 11 symbols are an uplink transmission resource. The first timeslot or subframe includes one first-format uplink control channel and four second-format uplink control channels. The first-format uplink control channel occupies seven symbols following the gap, and the four second-format uplink control channels sequentially occupy remaining four symbols. In this case, the symbols occupied by the first-format uplink control channel are completely different from the symbols occupied by the second-format uplink control channel.

Referring to FIG. 10B, a first symbol following a gap is used for a data channel. The first-format uplink control channel occupies seven symbols following the gap and the data channel, three of the four second-format uplink control channels sequentially occupy remaining three symbols, the other one second-format uplink control channel occupies one symbol, and the one symbol is any one of the seven symbols occupied by the first-format uplink control channel. In this case, the symbols occupied by the first-format uplink control channel are partially the same as the symbols occupied by the second-format uplink control channels.

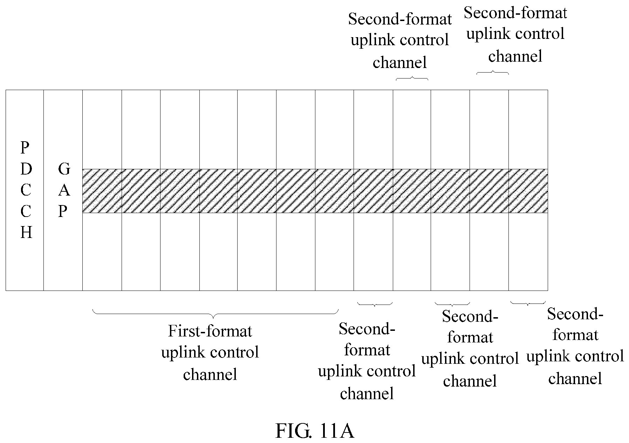

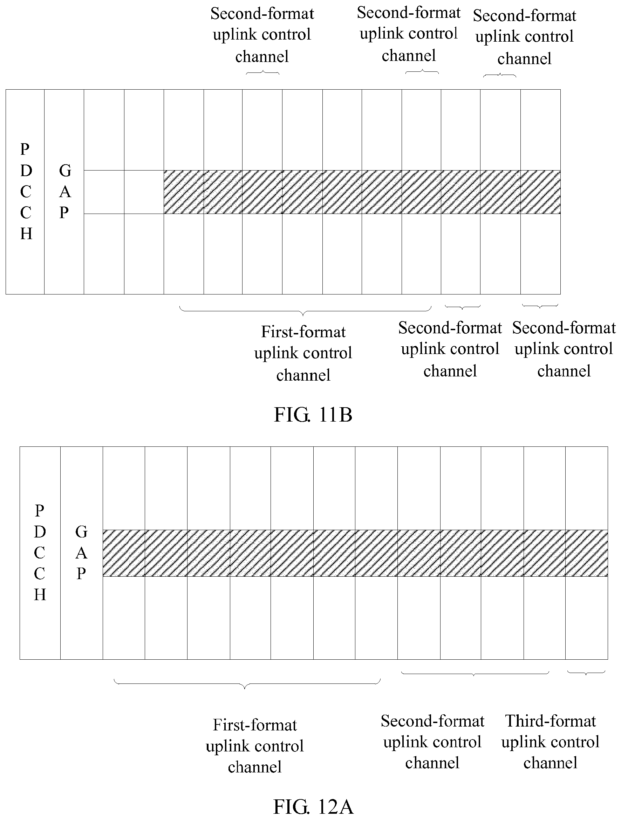

For another example, the at least one first-format uplink control channel is specifically one first-format uplink control channel, the at least one second-format uplink control channel is specifically five second-format uplink control channels, the first-format uplink control channel occupies seven symbols of the first timeslot or subframe, each of the five second-format uplink control channels occupies one symbol of the first timeslot or subframe, and the seven symbols are completely different from or partially the same as the one symbol in the first timeslot or subframe. For details, refer to FIG. 11A and FIG. 11B. FIG. 11A is a schematic diagram of a first-format uplink control channel and a second-format uplink control channel in Embodiment 10 of an uplink control channel transmission method according to this application. FIG. 11B is another schematic diagram of a first-format uplink control channel and a second-format uplink control channel in Embodiment 10 of an uplink control channel transmission method according to this application.

Referring to FIG. 11A, the first timeslot or subframe is a UL domain timeslot or subframe including 14 symbols. First two symbols of the first timeslot or subframe are a downlink transmission resource and a gap (Gap), and remaining 12 symbols are an uplink transmission resource. The first timeslot or subframe includes one first-format uplink control channel and five second-format uplink control channels. The first-format uplink control channel occupies seven symbols following the gap, and the five second-format uplink control channels sequentially occupy remaining five symbols. In this case, the symbols occupied by the first-format uplink control channel are completely different from the symbols occupied by the second-format uplink control channels.

Referring to FIG. 11B, a first symbol and a second symbol following a gap are used for a data channel. The first-format uplink control channel occupies seven symbols following the data channel, three of the five second-format uplink control channels sequentially occupy remaining three symbols, and one symbol occupied by each of the other two second-format uplink control channels is any one of the seven symbols occupied by the first-format uplink control channel. In this case, the symbols occupied by the first-format uplink control channel are partially the same as the symbols occupied by the second-format uplink control channels.

The following uses an example in which one first-format uplink control channel, one second-format uplink control channel, and one third-format uplink control channel are added to the first timeslot or subframe, to describe in detail the uplink control channel transmission method.

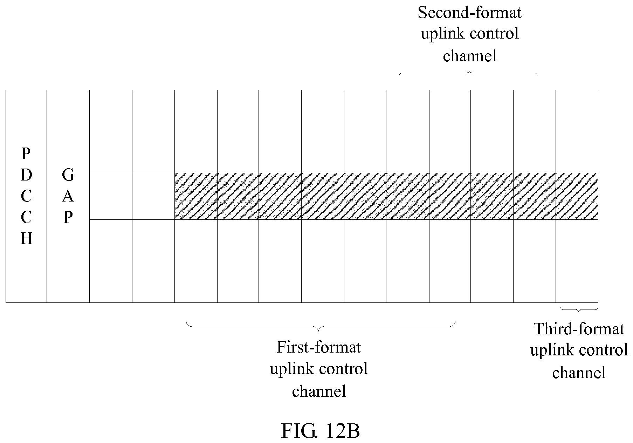

For example, the first-format uplink control channel occupies seven symbols of the first timeslot or subframe, the second-format uplink control channel occupies four symbols of the first timeslot or subframe, the third-format uplink control channel occupies one symbol of the first timeslot or subframe, and the seven symbols, the four symbols, and the one symbol are completely different or partially the same in the first timeslot or subframe. For details, refer to FIG. 12A and FIG. 12B. FIG. 12A is a schematic diagram of a first-format uplink control channel, a second-format uplink control channel, and a third-format uplink control channel in Embodiment 11 of an uplink control channel transmission method according to this application. FIG. 12B is another schematic diagram of a first-format uplink control channel, a second-format uplink control channel, and a third-format uplink control channel in Embodiment 11 of an uplink control channel transmission method according to this application.

Referring to FIG. 12A, the first timeslot or subframe is a UL domain timeslot or subframe including 14 symbols. First two symbols of the first timeslot are a downlink transmission resource and a gap (Gap), and remaining 12 symbols are an uplink transmission resource. The first timeslot or subframe includes one first-format uplink control channel, one second-format uplink control channel, and one third-format uplink control channel. The first-format uplink control channel occupies seven symbols following the gap, the second-format uplink control channel occupies four of remaining five symbols, and the third-format uplink control channel occupies a last one symbol. In this case, symbols occupied by the first-format uplink control channel, the second-format uplink control channel, and the third-format uplink control channel are completely different.

Referring to FIG. 12B, two symbols following a gap are used for a data channel. The first-format uplink control channel occupies seven symbols following the data channel, the second-format uplink control channel occupies four symbols, where two of the four symbols overlap symbols occupied by the first-format uplink control channel, and the third-format uplink control channel occupies a last symbol. In this case, symbols occupied by the first-format uplink control channel, the second-format uplink control channel, and the third-format uplink control channel are partially the same.

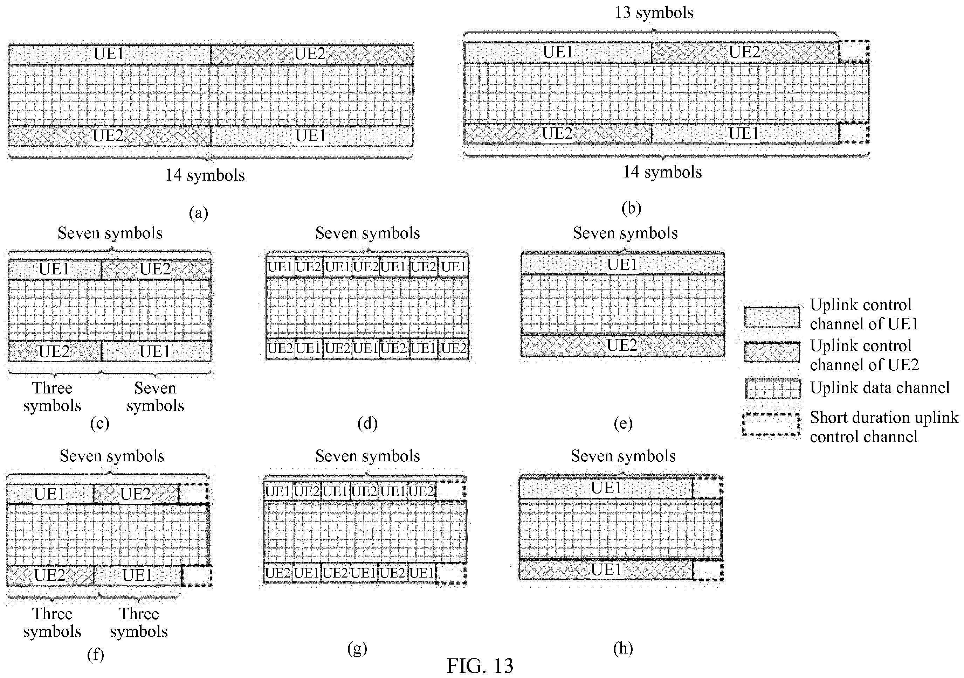

The following uses an example in which the first timeslot or subframe includes seven symbols or 14 symbols, and an uplink control channel occupies one symbol, two symbols, four symbols, seven symbols, or 14 symbols, to describe in detail the uplink control channel transmission. For details, refer to FIG. 13, FIG. 14, FIG. 15A, FIG. 15B, FIG. 16, FIG. 17A, and FIG. 17B.

FIG. 13 is a schematic diagram of different formats of uplink control channels in Embodiment 12 of an uplink control channel transmission method according to this application. Referring to FIG. 13, frequency division multiplexing is used for an uplink control channel and an uplink data (UL data) channel, so that a plurality of UEs use a same format of an uplink control channel by using frequency diversity.

In (a), the first timeslot or subframe includes 14 symbols, and may include one first-format uplink control channel occupying the 14 symbols, that is, include one long duration UL control channel. The first-format uplink control channel may be occupied by UE1 and UE2, and the UE1 and the UE2 use different frequency domain resources in different time domains by using frequency diversity. For example, the 14 symbols are equally divided into two parts. In first seven symbols, the UE1 and the UE2 respectively occupy two ends of system bandwidth. In following seven symbols, a frequency domain resource previously occupied by the UE1 is occupied by the UE2, and a frequency domain resource previously occupied by the UE2 is occupied by the UE1.

In (b), the first timeslot or subframe includes 14 symbols. The first timeslot or subframe includes one first-format uplink control channel occupying 13 symbols and one second-format uplink control channel occupying one symbol. The first-format uplink control channel is a long duration UL control channel and the second-format uplink control channel is a short duration UL control channel. The first-format uplink control channel may be occupied by UE1 and UE2, and the UE1 and the UE2 use different frequency domain resources in different time domains by using frequency diversity. The second-format uplink control channel may also be used by a plurality of UEs.

In (c), the first timeslot or subframe includes seven symbols. The first timeslot or subframe includes one first-format uplink control channel occupying the seven symbols. In other words, the first timeslot or subframe includes one long duration UL control channel. The first-format uplink control channel may be occupied by UE1 and UE2, and the UE1 and the UE2 use different frequency domain resources in different time domains by using frequency diversity. For example, the seven symbols are divided into two parts. In first three symbols, the UE1 and the UE2 respectively occupy two ends of system bandwidth. In following four symbols, a frequency domain resource previously occupied by the UE1 is occupied by the UE2, and a frequency domain resource previously occupied by the UE2 is occupied by the UE1. In addition, another frequency diversity solution may be used. For example, the UE1 and the UE2 separately occupy one symbol to perform sending at an interval, as shown in (d). For another example, no frequency diversity solution is used. For example, the UE1 and the UE2 respectively occupy two ends of a frequency band to perform sending, as shown in (e).

In (f), the first timeslot or subframe includes seven symbols. The first timeslot or subframe includes one first-format uplink control channel occupying six symbols and one second-format uplink control channel occupying one symbol. The first-format uplink control channel is a long duration UL control channel and the second-format uplink control channel is a short duration UL control channel. The first-format uplink control channel may be occupied by UE1 and UE2, and the UE1 and the UE2 use different frequency domain resources in different time domains by using frequency diversity. For example, the six symbols are equally divided into two parts. In first three symbols, the UE1 and the UE2 respectively occupy two ends of system bandwidth. In following three symbols, a frequency domain resource previously occupied by the UE1 is occupied by the UE2, and a frequency domain resource previously occupied by the UE2 is occupied by the UE1. For another example, the UE1 and the UE2 separately occupy one symbol to perform sending at an interval, as shown in (g). For another example, no frequency diversity solution is used. For example, the UE1 and the UE2 respectively occupy two ends of a frequency band to perform sending, as shown in (h). The second-format uplink control channel may also be used by a plurality of UEs.

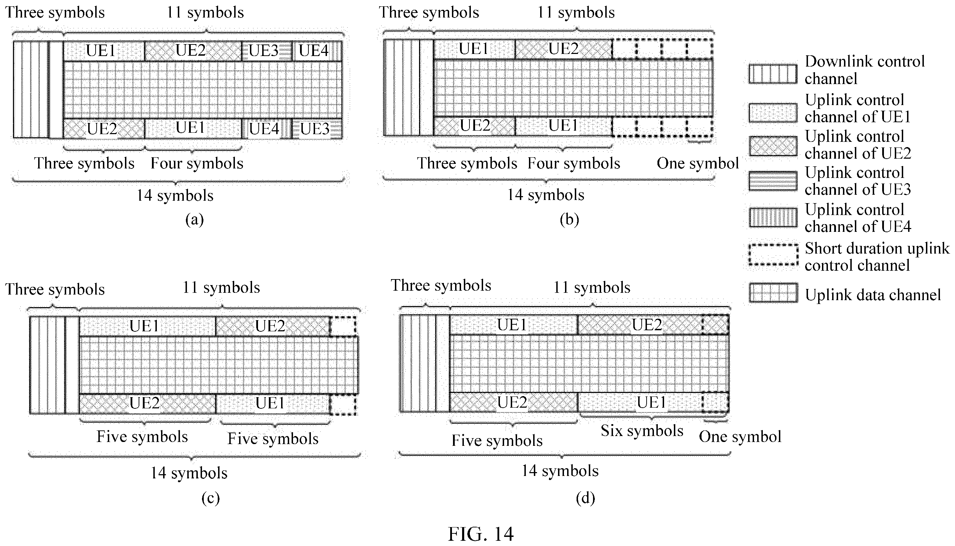

FIG. 14 is a schematic diagram of different formats of uplink control channels in Embodiment 13 of an uplink control channel transmission method according to this application.

In (a), the first timeslot or subframe includes 14 symbols. First three symbols are a downlink transmission resource and a gap (Gap), and remaining 11 symbols are an uplink transmission resource. The first timeslot or subframe includes one first-format uplink control channel occupying seven symbols and one second-format uplink control channel occupying four symbols. Both the first-format uplink control channel and the second-format uplink control channel are long duration UL control channels. The first-format uplink control channel may be used by UE1 and UE2, and the UE1 and the UE2 use different frequency domain resources in different time domains by using frequency diversity. The second-format uplink control channel may be used by UE3 and UE4, and the UE3 and the UE4 use different frequency domain resources in different time domains by using frequency diversity. In addition, uplink transmission resources occupied by the UE3 and the UE4, that is, the symbols occupied by the second-format uplink control channel, may be reused by the UE1 and the UE2, so that an uplink control channel of the UE1 and the UE2 may occupy 11 symbols.

In (b), the first timeslot or subframe includes 14 symbols, first three symbols are a downlink transmission resource and a gap (Gap), and remaining 11 symbols are an uplink transmission resource. The first timeslot or subframe includes one first-format uplink control channel occupying seven symbols and four second-format uplink control channels each occupying one symbol. The first-format uplink control channel is a long duration UL control channel and the second-format uplink control channels are short duration UL control channels. The first-format uplink control channel may be used by UE1 and UE2, and the UE1 and the UE2 use different frequency domain resources in different time domains by using frequency diversity. For details, refer to (c), (d), and (e) of FIG. 13.

Although last four symbols are corresponding to four short duration UL control channels in (b), this embodiment of this application is not limited thereto. In another feasible implementation, for example, the last four symbols include two short duration UL control channels each occupying two symbols. For another example, the last four symbols include one short duration UL control channel occupying two symbols and two short duration UL control channels each occupying one symbol, where an arrangement order may be flexibly set.

In (c), the first timeslot or subframe includes 14 symbols, first three symbols are a downlink transmission resource and a gap (Gap), and remaining 11 symbols are an uplink transmission resource. The first timeslot or subframe includes one first-format uplink control channel occupying 10 symbols and one second-format uplink control channel occupying one symbol. The first-format uplink control channel is a long duration UL control channel and the second-format uplink control channel is a short duration UL control channel. The first-format uplink control channel may be used by UE1 and UE2, and the UE1 and the UE2 use different frequency domain resources in different time domains by using frequency diversity. The symbols occupied by the first-format uplink control channel are completely different from the symbol occupied by the second-format uplink control channel.

In (d), the first timeslot or subframe includes 14 symbols, first three symbols are a downlink transmission resource and a gap (Gap), and remaining 11 symbols are an uplink transmission resource. The first timeslot or subframe includes one first-format uplink control channel occupying 11 symbols and one second-format uplink control channel occupying one symbol. The first-format uplink control channel is a long duration UL control channel and the second-format uplink control channel is a short duration UL control channel. The first-format uplink control channel may be used by UE1 and UE2, and the UE1 and the UE2 use different frequency domain resources in different time domains by using frequency diversity. The one symbol occupied by the second-format uplink control channel is a last symbol of the 11 symbols occupied by the first-format uplink control channel. In other words, the symbols occupied by the first-format uplink control channel are partially the same as the symbol occupied by the second-format uplink control channel.

It should be noted that, although uplink control channels in different formats occupy a same frequency resource in (b), (c), and (d) of FIG. 14A, this embodiment of this application is not limited thereto. In another feasible implementation, frequencies occupied by uplink control channels in different formats are completely different or partially the same.

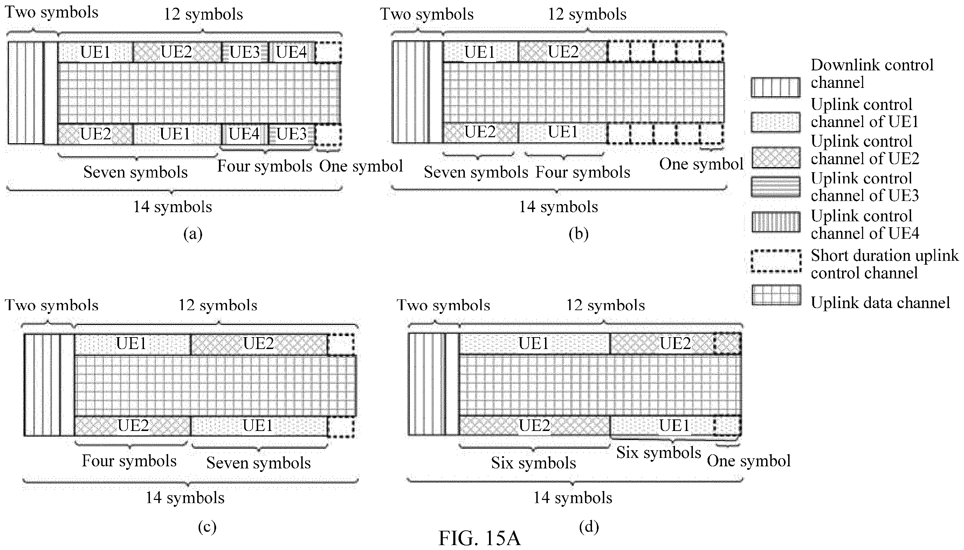

FIG. 15A is a schematic diagram of different formats of uplink control channels in Embodiment 14 of an uplink control channel transmission method according to this application.

In (a), the first timeslot or subframe includes 14 symbols. First two symbols are a downlink transmission resource and a gap (Gap), and remaining 12 symbols are an uplink transmission resource. The first timeslot or subframe includes one first-format uplink control channel occupying seven symbols, one second-format uplink control channel occupying four symbols, and one third-format uplink control channel occupying one symbol. Both the first-format uplink control channel and the second-format uplink control channel are long duration UL control channels, and the third-format uplink control channel is a short duration UL control channel. The first-format uplink control channel may be used by UE1 and UE2, and the UE1 and the UE2 use different frequency domain resources in different time domains by using frequency diversity. The second-format uplink control channel may be used by UE3 and UE4, and the UE3 and the UE4 use different frequency domain resources in different time domains by using frequency diversity. In addition, uplink transmission resources occupied by the UE3 and the UE4, that is, the symbols occupied by the second-format uplink control channel, may be reused by the UE1 and the UE2, so that an uplink control channel of the UE1 and the UE2 may occupy 11 symbols.

In (b), the first timeslot or subframe includes 14 symbols, first two symbols are a downlink transmission resource and a gap (Gap), and remaining 12 symbols are an uplink transmission resource. The first timeslot or subframe includes one first-format uplink control channel occupying seven symbols and five second-format uplink control channels each occupying one symbol. The first-format uplink control channel is a long duration UL control channel, and the second-format uplink control channels are short duration UL control channels. The first-format uplink control channel may be used by UE1 and UE2, and the UE1 and the UE2 use different frequency domain resources in different time domains by using frequency diversity. For details, refer to (c), (d), and (e) of FIG. 13.

Although last five symbols are corresponding to five short duration UL control channels in (b), this embodiment of this application is not limited thereto. In another feasible implementation, for example, the last five symbols include two short duration UL control channels each occupying two symbols and one short duration UL control channel occupying one symbol. For another example, the last five symbols include one short duration UL control channel occupying two symbols and three short duration UL control channels each occupying one symbol, where an arrangement order may be flexibly set.

In (c), the first timeslot or subframe includes 14 symbols, first two symbols are a downlink transmission resource and a gap (Gap), and remaining 12 symbols are an uplink transmission resource. The first timeslot or subframe includes one first-format uplink control channel occupying 11 symbols and one second-format uplink control channel occupying one symbol. The first-format uplink control channel is a long duration UL control channel and the second-format uplink control channel is a short duration UL control channel. The first-format uplink control channel may be used by UE1 and UE2, and the UE1 and the UE2 use different frequency domain resources in different time domains by using frequency diversity. The symbols occupied by the first-format uplink control channel are completely different from the symbol occupied by the second-format uplink control channel.

In (d), the first timeslot or subframe includes 14 symbols, first two symbols are a downlink transmission resource and a gap (Gap), and remaining 12 symbols are an uplink transmission resource. The first timeslot or subframe includes one first-format uplink control channel occupying 12 symbols and one second-format uplink control channel occupying one symbol. The first-format uplink control channel is a long duration UL control channel and the second-format uplink control channel is a short duration UL control channel. The first-format uplink control channel may be used by UE1 and UE2, and the UE1 and the UE2 use different frequency domain resources in different time domains by using frequency diversity. The one symbol occupied by the second-format uplink control channel is a last symbol of the 12 symbols occupied by the first-format uplink control channel. In other words, the symbols occupied by the first-format uplink control channel are partially the same as the symbol occupied by the second-format uplink control channel.

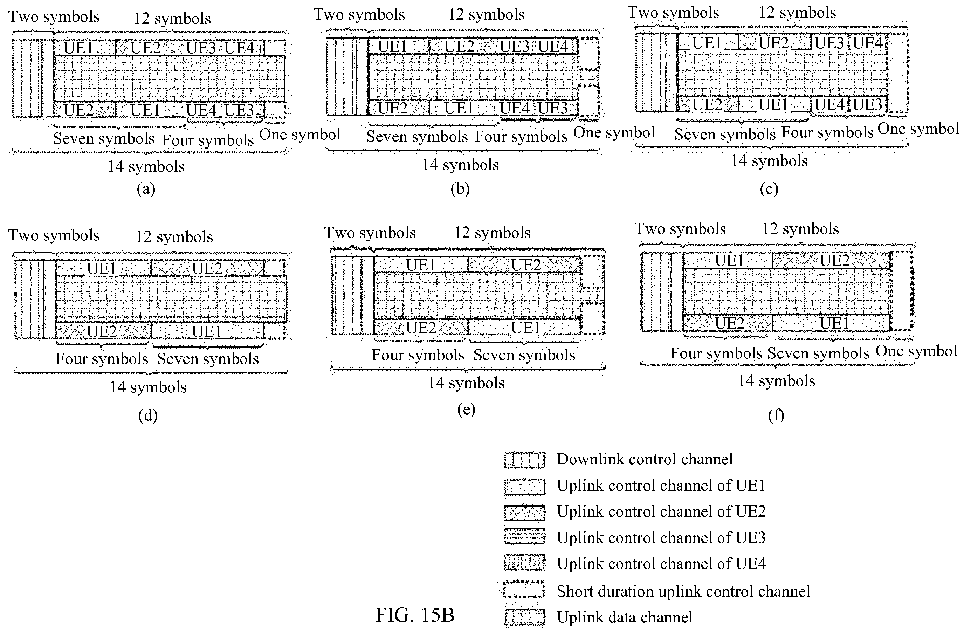

It should be noted that, although uplink control channels in different formats occupy a same frequency resource in (a), (b), (c), and (d) of FIG. 15A, this embodiment of this application is not limited thereto. In another feasible implementation, frequencies occupied by uplink control channels in different formats are completely different or partially the same. For details, refer to FIG. 15B.

FIG. 15B is another schematic diagram of different formats of uplink control channels in Embodiment 14 of an uplink control channel transmission method according to this application. From comparison between (a), (b), and (c), it is found that in (a), the first-format uplink control channel (used by the UE1 and the UE2), the second-format uplink control channel (used by the UE3 and the UE4), and the third-format uplink control channel occupy a same frequency resource, that is, all occupy two ends of a system frequency band; in (b), the first-format uplink control channel and the second-format uplink control channel occupy a same frequency resource, that is, both occupy two ends of a system frequency band, and the third-format uplink control channel occupies more frequency resources than those occupied by the first-format uplink control channel and the second-format uplink control channel; and in (c), the first-format uplink control channel and the second-format uplink control channel occupy a same frequency resource, that is, both occupy two ends of a system frequency band, and the third-format uplink control channel occupies all frequency resources of the system frequency band.

Likewise, from comparison between (d), (e), and (f), it is founded that in (d), the first-format uplink control channel (used by the UE1), the second-format uplink control channel (used by the UE2), and the third-format uplink control channel occupy a same frequency resource, that is, all occupy two ends of a system frequency band; in (b), the first-format uplink control channel and the second-format uplink control channel occupy a same frequency resource, that is, both occupy two ends of a system frequency band, and the third-format uplink control channel occupies more frequency resources than those occupied by the first-format uplink control channel and the second-format uplink control channel; and in (c), the first-format uplink control channel and the second-format uplink control channel occupy a same frequency resource, that is, both occupy two ends of a system frequency band, and the third-format uplink control channel occupies all frequency resources of the system frequency band.

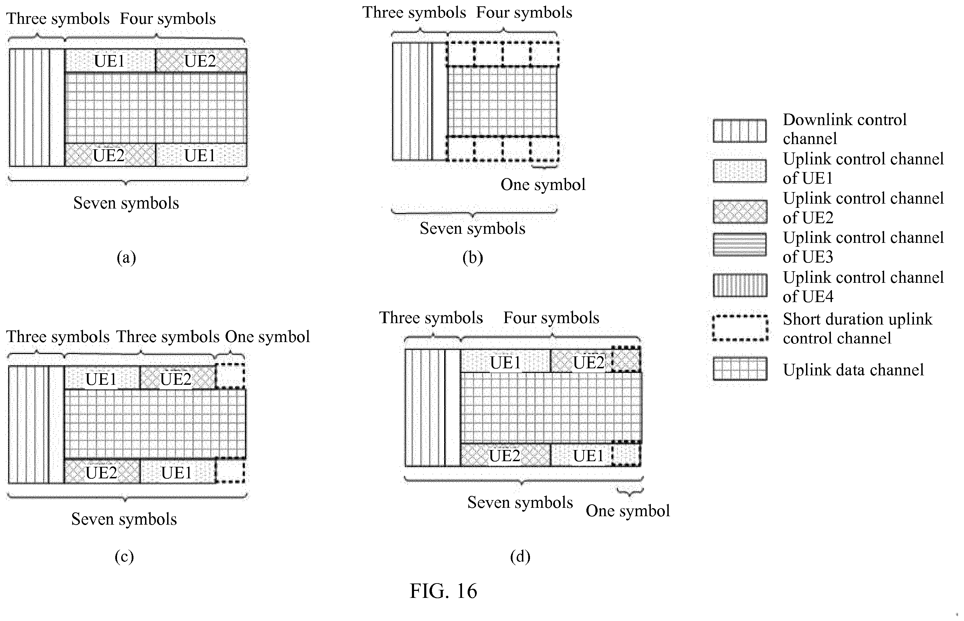

FIG. 16 is a schematic diagram of different formats of uplink control channels in Embodiment 15 of an uplink control channel transmission method according to this application.

In (a), the first timeslot or subframe includes seven symbols, first three symbols are a downlink transmission resource and a gap (Gap), and remaining four symbols are an uplink transmission resource. The first timeslot or subframe includes one first-format uplink control channel occupying four symbols, the first-format uplink control channel may be used by UE1 and UE2, and the UE1 and the UE2 use different frequency domain resource in different time domains by using frequency diversity.

In (b), the first timeslot or subframe includes seven symbols, first three symbols are a downlink transmission resource and a gap (Gap), and remaining four symbols are an uplink transmission resource. The first timeslot or subframe includes four short duration UL control channels each occupying one symbol. However, this embodiment of this application is not limited thereto. In another feasible implementation, for example, the four symbols include two short duration UL control channels each occupying two symbols. For another example, the four symbols include one short duration UL control channel occupying two symbols and two short duration UL control channels each occupying one symbol, where an arrangement order may be flexibly set.

In (c), the first timeslot or subframe includes seven symbols, first three symbols are a downlink transmission resource and a gap (Gap), and remaining one symbol is an uplink transmission resource. The first timeslot or subframe includes one first-format uplink control channel occupying three symbols and one second-format uplink control channel occupying one symbol.

The first-format uplink control channel is a long duration UL control channel and the second-format uplink control channel is a short duration UL control channel. The first-format uplink control channel may be used by UE1 and UE2, and the UE1 and the UE2 use different frequency domain resources in different time domains by using frequency diversity. The symbols occupied by the first-format uplink control channel are completely different from the symbol occupied by the second-format uplink control channel.

In (d), the first timeslot or subframe includes seven symbols, first three symbols are a downlink transmission resource and a gap (Gap), and remaining one symbol is an uplink transmission resource. The first timeslot or subframe includes one first-format uplink control channel occupying four symbols and one second-format uplink control channel occupying one symbol. The first-format uplink control channel is a long duration UL control channel and the second-format uplink control channel is a short duration UL control channel. The first-format uplink control channel may be used by UE1 and UE2, and the UE1 and the UE2 use different frequency domain resources in different time domains by using frequency diversity. The one symbol occupied by the second-format uplink control channel is a last symbol of the four symbols occupied by the first-format uplink control channel. In other words, the symbols occupied by the first-format uplink control channel are partially the same as the symbol occupied by the second-format uplink control channel.

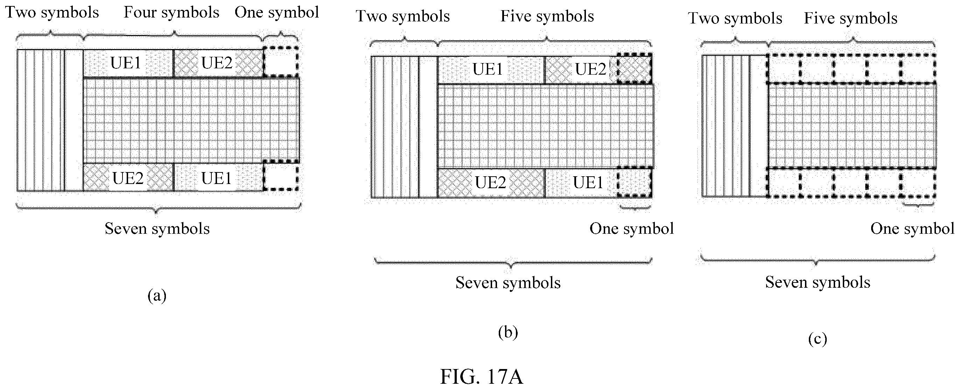

FIG. 17A is a schematic diagram of different formats of uplink control channels in Embodiment 16 of an uplink control channel transmission method according to this application.

In (a), the first timeslot or subframe includes seven symbols. First two symbols are a downlink transmission resource and a gap (Gap), and remaining five symbols are an uplink transmission resource. The first timeslot or subframe includes one first-format uplink control channel occupying four symbols and one second-format uplink control channel occupying one symbol. The first-format uplink control channel is a long duration UL control channel and the second-format uplink control channel is a short duration UL control channel. The first-format uplink control channel may be used by UE1 and UE2, and the UE1 and the UE2 use different frequency domain resources in different time domains by using frequency diversity. The one symbol occupied by the second-format uplink control channel is a last symbol of the remaining five symbols. In other words, the symbols occupied by the first-format uplink control channel are completely different from the symbol occupied by the second-format uplink control channel.

In (b), the first timeslot or subframe includes seven symbols, first two symbols are a downlink transmission resource and a gap (Gap), and remaining five symbols are an uplink transmission resource. The first timeslot or subframe includes one first-format uplink control channel occupying five symbols and one second-format uplink control channel occupying one symbol. The first-format uplink control channel is a long duration UL control channel and the second-format uplink control channel is a short duration UL control channel. The first-format uplink control channel may be used by UE1 and UE2, and the UE1 and the UE2 use different frequency domain resources in different time domains by using frequency diversity. The one symbol occupied by the second-format uplink control channel is any one of the five symbols occupied by the first-format uplink control channel. In other words, the symbols occupied by the first-format uplink control channel are partially the same as the symbol occupied by the second-format uplink control channel.

In (c), the first timeslot or subframe includes seven symbols, first two symbols are a downlink transmission resource and a gap (Gap), and remaining five symbols are an uplink transmission resource. The first timeslot or subframe includes five short duration UL control channels each occupying one symbol. However, this embodiment of this application is not limited thereto. In another feasible implementation, for example, the five symbols include two short duration UL control channels each occupying two symbols and one short duration UL control channel occupying one symbol. For another example, the five symbols include one short duration UL control channel occupying two symbols and three short duration UL control channels each occupying one symbol, where an arrangement order may be flexibly set.

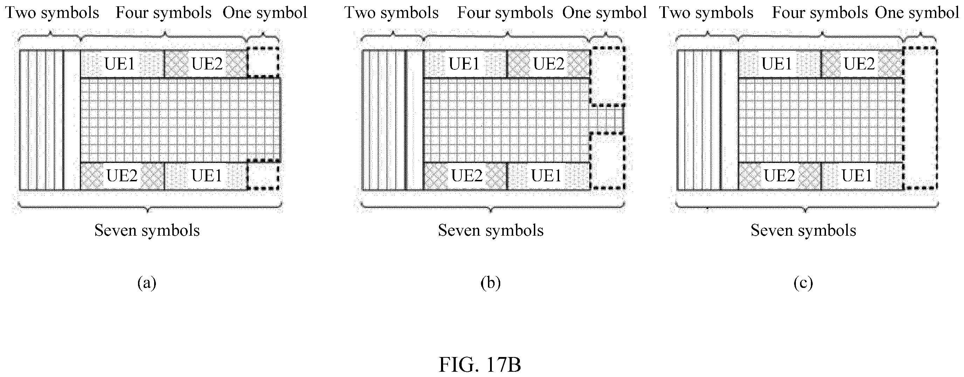

It should be noted that, although uplink control channels in different formats occupy a same frequency resource in (a) and (b) of FIG. 17A, this embodiment of this application is not limited thereto. In another feasible implementation, frequencies occupied by uplink control channels in different formats are completely different or partially the same. For details, refer to FIG. 17B.

FIG. 17B is another schematic diagram of different formats of uplink control channels in Embodiment 16 of an uplink control channel transmission method according to this application.

From comparison between (a), (b), and (c), it is found that in (a), the first-format uplink control channel (used by the UE1 and the UE2) and the second-format uplink control channel (namely, a short duration UL control channel occupying one symbol) occupy a same frequency resource, that is, both occupy two ends of a system frequency band; in (b), the first-format uplink control channel occupies frequency resources at two ends of a system frequency band, and the second-format uplink control channel occupies more frequency resources than those occupied by the first-format uplink control channel; and in (c), the first-format uplink control channel occupies frequency resources at two ends of a system frequency band, and the second-format uplink control channel occupies all frequency resources of the system frequency band.

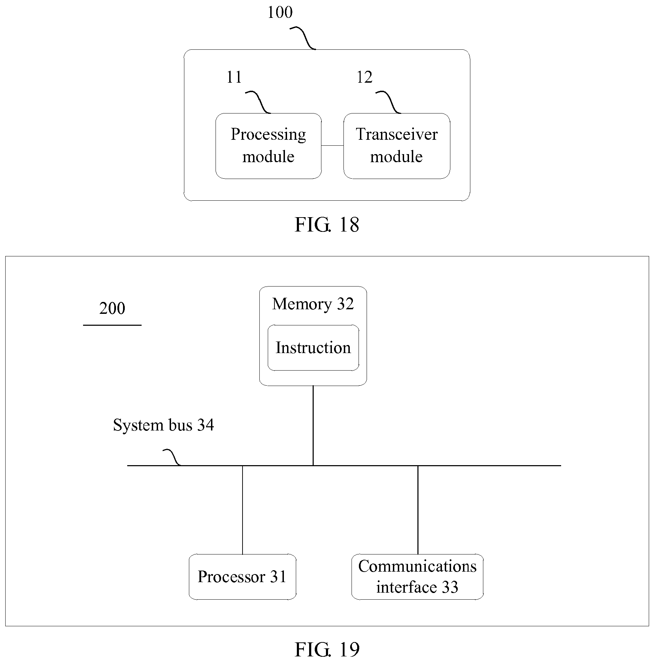

FIG. 18 is a schematic structural diagram of Embodiment 1 of an uplink control channel transmission apparatus according to this application. The uplink control channel transmission apparatus provided in this embodiment can implement steps of the method that is applied to the uplink control channel transmission apparatus and that is provided in any embodiment of this application. Specifically, the uplink control channel transmission apparatus 100 provided in this embodiment includes:
a processing module 11, configured to generate a first timeslot or subframe including at least one first-format uplink control channel and at least one second-format uplink control channel, where the first-format uplink control channel occupies N symbols of the first timeslot or subframe, the second-format uplink control channel occupies M symbols of the first timeslot or subframe, and N is greater than or equal to M; and
a transceiver module 12, configured to transmit the first timeslot or subframe.

According to the uplink control channel transmission apparatus provided in this embodiment of this application, the at least one first-format uplink control channel and the at least one second-format uplink control channel are added to the first timeslot or subframe, and then the first timeslot or subframe including the at least one first-format uplink control channel and the at least one second-format uplink control channel is transmitted. In the process, there are only two formats of uplink control channels, so that uplink scheduling complexity is reduced.

Optionally, in an embodiment of this application, a symbol occupied by at least one of the at least one first-format uplink control channel is completely different from or partially the same as a symbol occupied by at least one of the at least one second-format uplink control channel. Optionally, in an embodiment of this application, at least one of the at least one first-format uplink control channel occupies a first frequency resource, at least one of the at least one second-format uplink control channel occupies a second frequency resource, and the first frequency resource is completely different from or partially the same as the second frequency resource.

Optionally, in an embodiment of this application, the first frequency resource occupies two ends of a system frequency band, and the second frequency resource occupies all or a part of the system frequency band, or the second frequency occupies a part of the system frequency band except the first frequency resource.

Optionally, in an embodiment of this application, the first timeslot or subframe further includes at least one third-format uplink control channel; and a symbol occupied by at least one of the at least one third-format uplink control channel is completely different from or partially the same as the symbol occupied by the at least one of the at least one first-format uplink control channel; or a symbol occupied by at least one of the at least one third-format uplink control channel is completely different from or partially the same as the symbol occupied by the at least one of the at least one second-format uplink control channel.

Optionally, in an embodiment of this application, the at least one of the at least one first-format uplink control channel occupies the first frequency resource, the at least one of the at least one second-format uplink control channel occupies the second frequency resource, the at least one third-format uplink control channel of the at least one third-format uplink control channel format occupies a third frequency resource, and the first frequency resource is completely different from or partially the same as the second frequency resource; and
the third frequency resource is completely different from or partially the same as the first frequency resource, or the third frequency resource is completely different from or partially the same as the second frequency resource.

Optionally, in an embodiment of this application, the third frequency occupies all or a part of the system frequency band, or the third frequency occupies a part of the system frequency band except the first frequency resource and the second frequency resource.

Optionally, in an embodiment of this application, the first-format uplink control channel, the second-format uplink control channel, or the third-format uplink control channel occupies at least two parts of frequency resources, and at least two of the at least two parts of frequency resources are different.

Optionally, in an embodiment of this application, the at least one first-format uplink control channel is specifically one first-format uplink control channel, and the at least one second-format uplink control channel is specifically one second-format uplink control channel, where
the first-format uplink control channel occupies seven symbols of the first timeslot or subframe, the second-format uplink control channel occupies four symbols of the first timeslot or subframe, and the seven symbols are completely different from or partially the same as the four symbols in the first timeslot or subframe; or
the first-format uplink control channel occupies 10 symbols of the first timeslot or subframe, the second-format uplink control channel occupies one symbol of the first timeslot or subframe, and the 10 symbols are completely different from or partially the same as the one symbol in the first timeslot or subframe; or
the first-format uplink control channel occupies 11 symbols of the first timeslot or subframe, the second-format uplink control channel occupies one symbol of the first timeslot or subframe, and the 11 symbols are completely different from or partially the same as the one symbol in the first timeslot or subframe; or
the first-format uplink control channel occupies 13 symbols of the first timeslot or subframe, the second-format uplink control channel occupies one symbol of the first timeslot or subframe, and the 13 symbols are completely different from or partially the same as the one symbol in the first timeslot or subframe; or
the first-format uplink control channel occupies six symbols of the first timeslot or subframe, the second-format uplink control channel occupies one symbol of the first timeslot or subframe, and the six symbols are completely different from or partially the same as the one symbol in the first timeslot or subframe; or
the first-format uplink control channel occupies four symbols of the first timeslot or subframe, the second-format uplink control channel occupies one symbol of the first timeslot or subframe, and the four symbols are completely different from or partially the same as the one symbol in the first timeslot or subframe; or
the first-format uplink control channel occupies three symbols of the first timeslot or subframe, the second-format uplink control channel occupies one symbol of the first timeslot or subframe, and the three symbols are completely different from or partially the same as the one symbol in the first timeslot or subframe.

Optionally, in an embodiment of this application, the at least one first-format uplink control channel is specifically one first-format uplink control channel, the at least one second-format uplink control channel is specifically four second-format uplink control channels, the first-format uplink control channel occupies seven symbols of the first timeslot or subframe, each of the four second-format uplink control channels occupies one symbol of the first timeslot or subframe, and the seven symbols are completely different from or partially the same as the one symbol in the first timeslot or subframe; or
the at least one first-format uplink control channel is specifically one first-format uplink control channel, the at least one second-format uplink control channel is specifically five second-format uplink control channels, the first-format uplink control channel occupies seven symbols of the first timeslot or subframe, each of the five second-format uplink control channels occupies one symbol of the first timeslot or subframe, and the seven symbols are completely different from or partially the same as the one symbol in the first timeslot or subframe.

Optionally, in an embodiment of this application, the at least one first-format uplink control channel is specifically one first-format uplink control channel, the at least one second-format uplink control channel is specifically one second-format uplink control channel, the at least one third-format uplink control channel is specifically one third-format uplink control channel, the first-format uplink control channel occupies seven symbols of the first timeslot or subframe, the second-format uplink control channel occupies four symbols of the first timeslot or subframe, the third-format uplink control channel occupies one symbol of the first timeslot or subframe, and the seven symbols, the four symbols, and the one symbol are completely different or partially the same in the first timeslot or subframe.

FIG. 19 is a schematic structural diagram of Embodiment 2 of an uplink control channel transmission apparatus according to this application. The uplink control channel transmission apparatus 200 provided in this embodiment includes a processor 21, a memory 22, a communications interface 23, and a system bus 24. The memory 22 and the communications interface 23 are connected to the processor 21 by using the system bus 24, to complete communication with each other. The memory 21 is configured to store a computer executable instruction. The communications interface 23 is configured to communicate with another device. The processor 21 is configured to run the computer executable instruction, so that the uplink control channel transmission apparatus performs all steps of the method applied to the uplink control channel transmission apparatus.

The system bus in FIG. 19 may be a peripheral component interconnect (peripheral component interconnect, PCI) bus, an extended industry standard architecture (extended industry standard architecture, EISA) bus, or the like. The system bus may be classified into an address bus, a data bus, a control bus, and the like. For ease of representation, only one thick line is used to represent the bus in the figure, but this does not mean that there is only one bus or only one type of bus. The communications interface is configured to implement communication between a database access apparatus and another device (such as a client, a read/write database, or a read-only database). The memory may include a random access memory (random access memory, RAM), or may further include a non-volatile memory (non-volatile memory), for example, at least one magnetic disk storage.

The processor may be a general purpose processor, including a central processing unit (Central Processing Unit, CPU), a network processor (Network Processor, NP), and the like; or may be a digital signal processor (Digital Signal Processing, DSP), an application-specific integrated circuit (Application Specific Integrated Circuit, ASIC), a field-programmable gate array (Field-Programmable Gate Array, FPGA) or another programmable logic device, a discrete gate or transistor logic device, or discrete hardware component.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes various media that can store program code, such as a ROM, a RAM, a magnetic disk, or an optical disc.

## Claims

1. An uplink control channel transmission method, comprising:
generating (101) at least one first-format uplink control channel and at least one second-format uplink control channel, wherein the first-format uplink control channel occupies N symbols of a first timeslot or subframe, the second-format uplink control channel occupies M symbols of the first timeslot or subframe, and N is greater than or equal to M; and
transmitting (102), to a network side device, the at least one first-format uplink control channel and the at least one second-format uplink control channel that are comprised in the first timeslot or subframe,
**characterized in that** the first timeslot or subframe further comprises at least one third-format uplink control channel; and
a symbol occupied by at least one of the at least one third-format uplink control channel is completely different from or partially the same as the symbol occupied by the at least one of the at least one first-format uplink control channel; or a symbol occupied by at least one of the at least one third-format uplink control channel is completely different from or partially the same as the symbol occupied by the at least one of the at least one second-format uplink control channel.

2. The method according to claim 1, wherein
a symbol occupied by at least one of the at least one first-format uplink control channel is completely different from a symbol occupied by at least one of the at least one second-format uplink control channel.

3. The method according to claim 1, wherein
at least one of the at least one first-format uplink control channel occupies a first frequency resource, at least one of the at least one second-format uplink control channel occupies a second frequency resource, and the first frequency resource is completely different from or partially the same as the second frequency resource.

4. An uplink control channel transmission apparatus (100), comprising:
a processing module (11), configured to generate at least one first-format uplink control channel and at least one second-format uplink control channel, wherein the first-format uplink control channel occupies N symbols of a first timeslot, the second-format uplink control channel occupies M symbols of the first timeslot, and N is greater than or equal to M; and
a transceiver module (12), configured to transmit, to a network side device, the at least one first-format uplink control channel and the at least one second-format uplink control channel that are comprised in the first timeslot or subframe,
**characterized in that** the first timeslot or subframe further comprises at least one third-format uplink control channel; and
a symbol occupied by at least one of the at least one third-format uplink control channel is completely different from or partially the same as the symbol occupied by the at least one of the at least one first-format uplink control channel; or a symbol occupied by at least one of the at least one third-format uplink control channel is completely different from or partially the same as the symbol occupied by the at least one of the at least one second-format uplink control channel.

5. The apparatus according to claim 4, wherein
a symbol occupied by at least one of the at least one first-format uplink control channel is completely different from or partially the same as a symbol occupied by at least one of the at least one second-format uplink control channel.

6. The apparatus according to claim 4, wherein
at least one of the at least one first-format uplink control channel occupies a first frequency resource, at least one of the at least one second-format uplink control channel occupies a second frequency resource, and the first frequency resource is completely different from or partially the same as the second frequency resource.

7. An uplink control channel reception method, comprising:
receiving at least one first-format uplink control channel and at least one second-format uplink control channel, the at least one first-format uplink control channel and the at least one second-format uplink control channel are comprised in a first timeslot or subframe, the first-format uplink control channel occupies N symbols of the first timeslot or subframe, the second-format uplink control channel occupies M symbols of the first timeslot or subframe, and N is greater than or equal to M,
**characterized in that** the first timeslot or subframe further comprises at least one third-format uplink control channel; and
a symbol occupied by at least one of the at least one third-format uplink control channel is completely different from or partially the same as the symbol occupied by the at least one of the at least one first-format uplink control channel; or a symbol occupied by at least one of the at least one third-format uplink control channel is completely different from or partially the same as the symbol occupied by the at least one of the at least one second-format uplink control channel.

8. The method according to claim 7, wherein
at least one of the at least one first-format uplink control channel and at least one of the at least one second-format uplink control channel are sent by a same terminal device.

9. The method according to claim 7, wherein
at least one of the at least one first-format uplink control channel and at least one of the at least one second-format uplink control channel are sent by different terminal devices; and
a symbol occupied by at least one of the at least one first-format uplink control channel is completely different from or partially the same as a symbol occupied by at least one of the at least one second-format uplink control channel.

10. An uplink control channel reception apparatus, comprising:
a receiving module, configured to receive at least one first-format uplink control channel and at least one second-format uplink control channel, the at least one first-format uplink control channel and the at least one second-format uplink control channel are comprised in a first timeslot or subframe, the first-format uplink control channel occupies N symbols of the first timeslot or subframe, the second-format uplink control channel occupies M symbols of the first timeslot or subframe, and N is greater than or equal to M,
**characterized in that** the first timeslot or subframe further comprises at least one third-format uplink control channel; and
a symbol occupied by at least one of the at least one third-format uplink control channel is completely different from or partially the same as the symbol occupied by the at least one of the at least one first-format uplink control channel; or a symbol occupied by at least one of the at least one third-format uplink control channel is completely different from or partially the same as the symbol occupied by the at least one of the at least one second-format uplink control channel.

11. The apparatus according to claim 10, wherein
at least one of the at least one first-format uplink control channel and at least one of the at least one second-format uplink control channel are sent by a same terminal device.

12. The apparatus according to claim 10, wherein
at least one of the at least one first-format uplink control channel and at least one of the at least one second-format uplink control channel are sent by different terminal devices; and
a symbol occupied by at least one of the at least one first-format uplink control channel is completely different from or partially the same as a symbol occupied by at least one of the at least one second-format uplink control channel.

## Patentansprüche

1. Uplink-Steuerkanal-Übertragungsverfahren, umfassend:
Erzeugen (101) mindestens eines Uplink-Steuerkanals eines ersten Formats und mindestens eines Uplink-Steuerkanals eines zweiten Formats, wobei der Uplink-Steuerkanal des ersten Formats N Symbole eines ersten Zeitschlitzes oder Unterrahmens belegt, wobei der Uplink-Steuerkanal des zweiten Formats M Symbole des ersten Zeitschlitzes oder Unterrahmens belegt und N größer oder gleich M ist; und Übertragen (102) an ein netzwerkseitiges Gerät des mindestens einen Uplink-Steuerkanals des ersten Formats und des mindestens einen Uplink-Steuerkanals des zweiten Formats, die in dem ersten Zeitschlitz oder Unterrahmen enthalten sind, **dadurch gekennzeichnet, dass** der erste Zeitschlitz oder Unterrahmen ferner mindestens einen Uplink-Steuerkanal des dritten Formats umfasst; und
ein Symbol, das von mindestens einem des mindestens einen Uplink-Steuerkanals des dritten Formats belegt ist, vollständig verschieden oder teilweise gleich dem Symbol ist, das von dem mindestens einen des mindestens einen Uplink-Steuerkanals des ersten Formats belegt ist; oder ein Symbol, das von mindestens einem des mindestens einen Uplink-Steuerkanals des dritten Formats belegt ist, vollständig verschieden oder teilweise gleich dem Symbol ist, das von dem mindestens einen des mindestens einen Uplink-Steuerkanals des zweiten Formats belegt ist.

2. Verfahren nach Anspruch 1, wobei
ein Symbol, das von mindestens einem des mindestens einen Uplink-Steuerkanals des ersten Formats belegt ist, von einem Symbol vollständig verschieden ist, das von mindestens einem des mindestens einen Uplink-Steuerkanals des zweiten Formats belegt ist.

3. Verfahren nach Anspruch 1, wobei
mindestens einer des mindestens einen Uplink-Steuerkanals des ersten Formats eine erste Frequenzressource belegt, mindestens einer des mindestens einen Uplink-Steuerkanals des zweiten Formats eine zweite Frequenzressource belegt und die erste Frequenzressource von der zweiten Frequenzressource vollständig verschieden oder teilweise gleich ist.

4. Uplink-Steuerkanal-Übertragungsvorrichtung (100), umfassend:
ein Verarbeitungsmodul (11), das konfiguriert ist, um mindestens einen Uplink-Steuerkanal eines ersten Formats und mindestens einen Uplink-Steuerkanal eines zweiten Formats zu erzeugen, wobei der Uplink-Steuerkanal des ersten Formats N Symbole eines ersten Zeitschlitzes belegt, wobei der Uplink-Steuerkanal des zweiten Formats M Symbole des ersten Zeitschlitzes belegt und wobei N größer oder gleich M ist; und
ein Transceivermodul (12), das konfiguriert ist, um zu einem netzwerkseitigen Gerät den mindestens einen Uplink-Steuerkanal des ersten Formats und den mindestens einen Uplink-Steuerkanal des zweiten Formats, die in dem ersten Zeitschlitz oder Unterrahmen enthalten sind, zu übertragen, **dadurch gekennzeichnet, dass** der erste Zeitschlitz oder Unterrahmen ferner mindestens einen Uplink-Steuerkanal des dritten Formats umfasst; und
ein Symbol, das von mindestens einem des mindestens einen Uplink-Steuerkanals des dritten Formats belegt ist, vollständig verschieden oder teilweise gleich dem Symbol ist, das von dem mindestens einen des mindestens einen Uplink-Steuerkanals des ersten Formats belegt ist; oder ein Symbol, das von mindestens einem des mindestens einen Uplink-Steuerkanals des dritten Formats belegt ist, vollständig verschieden oder teilweise gleich dem Symbol ist, das von dem mindestens einen des mindestens einen Uplink-Steuerkanals des zweiten Formats belegt ist.

5. Vorrichtung nach Anspruch 4, wobei
ein Symbol, das von mindestens einem des mindestens einen Uplink-Steuerkanals des ersten Formats belegt ist, von einem Symbol, das von mindestens einem des mindestens einen Uplink-Steuerkanals des zweiten Formats belegt ist, vollständig verschieden oder teilweise gleich ist.

6. Vorrichtung nach Anspruch 4, wobei
mindestens einer des mindestens einen Uplink-Steuerkanals des ersten Formats eine erste Frequenzressource belegt, mindestens einer des mindestens einen Uplink-Steuerkanals des zweiten Formats eine zweite Frequenzressource belegt und die erste Frequenzressource von der zweiten Frequenzressource vollständig verschieden oder teilweise gleich ist.

7. Uplink-Steuerkanal-Empfangsverfahren, umfassend:
Empfangen von mindestens einem Uplink-Steuerkanal des ersten Formats und mindestens einem Uplink-Steuerkanal des zweiten Formats, wobei der mindestens eine Uplink-Steuerkanal des ersten Formats und der mindestens eine Uplink-Steuerkanal des zweiten Formats in einem ersten Zeitschlitz oder Unterrahmen enthalten sind, wobei der Uplink-Steuerkanal des ersten Formats N Symbole des ersten Zeitschlitzes oder Unterrahmens belegt, wobei der Uplink-Steuerkanal des zweiten Formats M Symbole des ersten Zeitschlitzes oder Unterrahmens belegt und N größer oder gleich M ist, **dadurch gekennzeichnet, dass** der erste Zeitschlitz oder Unterrahmen ferner mindestens einen Uplink-Steuerkanal des dritten Formats umfasst; und
ein Symbol, das von mindestens einem des mindestens einen Uplink-Steuerkanals des dritten Formats belegt ist, vollständig verschieden oder teilweise gleich dem Symbol ist, das von dem mindestens einen des mindestens einen Uplink-Steuerkanals des ersten Formats belegt ist; oder ein Symbol, das von mindestens einem des mindestens einen Uplink-Steuerkanals des dritten Formats belegt ist, vollständig verschieden oder teilweise gleich dem Symbol ist, das von dem mindestens einen des mindestens einen Uplink-Steuerkanals des zweiten Formats belegt ist.

8. Verfahren nach Anspruch 7, wobei
mindestens einer des mindestens einen Uplink-Steuerkanals des ersten Formats und mindestens einer des mindestens einen Uplink-Steuerkanals des zweiten Formats von einem gleichen Endgerät gesendet werden.

9. Verfahren nach Anspruch 7, wobei
mindestens einer des mindestens einen Uplink-Steuerkanals des ersten Formats und mindestens einer des mindestens einen Uplink-Steuerkanals des zweiten Formats von verschiedenen Endgeräten gesendet werden; und
ein Symbol, das von mindestens einem des mindestens einen Uplink-Steuerkanals des ersten Formats belegt ist, von einem Symbol, das von mindestens einem des mindestens einen Uplink-Steuerkanals des zweiten Formats belegt ist, vollständig verschieden oder teilweise gleich ist.

10. Uplink-Steuerkanal-Empfangsvorrichtung, umfassend:
ein Empfangsmodul, das für Folgendes konfiguriert ist: Empfangen von mindestens einem Uplink-Steuerkanal des ersten Formats und mindestens einem Uplink-Steuerkanal des zweiten Formats, wobei der mindestens eine Uplink-Steuerkanal des ersten Formats und der mindestens eine Uplink-Steuerkanal des zweiten Formats in einem ersten Zeitschlitz oder Unterrahmen enthalten sind, wobei der Uplink-Steuerkanal des ersten Formats N Symbole des ersten Zeitschlitzes oder Unterrahmens belegt, wobei der Uplink-Steuerkanal des zweiten Formats M Symbole des ersten Zeitschlitzes oder Unterrahmens belegt und N größer oder gleich M ist, **dadurch gekennzeichnet, dass** der erste Zeitschlitz oder Unterrahmen ferner mindestens einen Uplink-Steuerkanal des dritten Formats umfasst; und
ein Symbol, das von mindestens einem des mindestens einen Uplink-Steuerkanals des dritten Formats belegt ist, vollständig verschieden oder teilweise gleich dem Symbol ist, das von dem mindestens einen des mindestens einen Uplink-Steuerkanals des ersten Formats belegt ist; oder ein Symbol, das von mindestens einem des mindestens einen Uplink-Steuerkanals des dritten Formats belegt ist, vollständig verschieden oder teilweise gleich dem Symbol ist, das von dem mindestens einen des mindestens einen Uplink-Steuerkanals des zweiten Formats belegt ist.

11. Vorrichtung nach Anspruch 10, wobei
mindestens einer des mindestens einen Uplink-Steuerkanals des ersten Formats und mindestens einer des mindestens einen Uplink-Steuerkanals des zweiten Formats von einem gleichen Endgerät gesendet werden.

12. Vorrichtung nach Anspruch 10, wobei
mindestens einer des mindestens einen Uplink-Steuerkanals des ersten Formats und mindestens einer des mindestens einen Uplink-Steuerkanals des zweiten Formats von verschiedenen Endgeräten gesendet werden; und
ein Symbol, das von mindestens einem des mindestens einen Uplink-Steuerkanals des ersten Formats belegt ist, von einem Symbol, das von mindestens einem des mindestens einen Uplink-Steuerkanals des zweiten Formats belegt ist, vollständig verschieden oder teilweise gleich ist.

## Revendications

1. Procédé de transmission de canal de commande de liaison montante, comprenant :
la génération (101) d'au moins un canal de commande de liaison montante de premier format et au moins un canal de commande de liaison montante de deuxième format, le canal de commande de liaison montante de premier format occupant N symboles d'un premier intervalle de temps ou d'une première sous-trame, le canal de commande de liaison montante de deuxième format occupant M symboles du premier intervalle de temps ou de la première sous-trame, et N étant supérieur ou égal à M ; et
la transmission (102), à un dispositif côté réseau, de l'au moins un canal de commande de liaison montante de premier format et de l'au moins un canal de commande de liaison montante de deuxième format qui sont compris dans le premier intervalle de temps ou la première sous-trame,
**caractérisé en ce que** le premier intervalle de temps ou la première sous-trame comprend en outre au moins un canal de commande de liaison montante de troisième format ; et
un symbole occupé par au moins un de l'au moins un canal de commande de liaison montante de troisième format est complètement différent ou partiellement identique au symbole occupé par l'au moins un de l'au moins un canal de commande de liaison montante de premier format ; ou un symbole occupé par au moins un de l'au moins un canal de commande de liaison montante de troisième format est complètement différent ou partiellement identique au symbole occupé par l'au moins un de l'au moins un canal de commande de liaison montante de deuxième format.

2. Procédé selon la revendication 1,
un symbole occupé par au moins un de l'au moins un canal de commande de liaison montante de premier format étant complètement différent d'un symbole occupé par au moins un de l'au moins un canal de commande de liaison montante de deuxième format.

3. Procédé selon la revendication 1,
au moins un de l'au moins un canal de commande de liaison montante de premier format occupant une première ressource de fréquence, au moins un de l'au moins un canal de commande de liaison montante de deuxième format occupant une seconde ressource de fréquence, et la première ressource de fréquence étant complètement différente ou partiellement identique à la seconde ressource de fréquence.

4. Appareil de transmission de canal de commande de liaison montante (100), comprenant :
un module de traitement (11), configuré pour générer au moins un canal de commande de liaison montante de premier format et au moins un canal de commande de liaison montante de deuxième format, le canal de commande de liaison montante de premier format occupant N symboles d'un premier intervalle de temps, le canal de commande de liaison montante de deuxième format occupant M symboles du premier intervalle de temps, et N étant supérieur ou égal à M ; et
un module émetteur-récepteur (12), configuré pour transmettre, à un dispositif côté réseau, l'au moins un canal de commande de liaison montante de premier format et l'au moins un canal de commande de liaison montante de deuxième format qui sont compris dans le premier intervalle de temps ou la première sous-trame, **caractérisé en ce que** le premier intervalle de temps ou la première sous-trame comprend en outre au moins un canal de commande de liaison montante de troisième format ; et
un symbole occupé par au moins un de l'au moins un canal de commande de liaison montante de troisième format est complètement différent ou partiellement identique au symbole occupé par l'au moins un de l'au moins un canal de commande de liaison montante de premier format ; ou un symbole occupé par au moins un de l'au moins un canal de commande de liaison montante de troisième format est complètement différent ou partiellement identique au symbole occupé par l'au moins un de l'au moins un canal de commande de liaison montante de deuxième format.

5. Appareil selon la revendication 4,
un symbole occupé par au moins un de l'au moins un canal de commande de liaison montante de premier format étant complètement différent ou partiellement identique à un symbole occupé par au moins un de l'au moins un canal de commande de liaison montante de deuxième format.

6. Appareil selon la revendication 4,
au moins un de l'au moins un canal de commande de liaison montante de premier format occupant une première ressource de fréquence, au moins un de l'au moins un canal de commande de liaison montante de deuxième format occupant une seconde ressource de fréquence, et la première ressource de fréquence étant complètement différente ou partiellement identique à la seconde ressource de fréquence.

7. Procédé de réception de canal de commande de liaison montante, comprenant :
la réception d'au moins un canal de commande de liaison montante de premier format et d'au moins un canal de commande de liaison montante de deuxième format, l'au moins un canal de commande de liaison montante de premier format et l'au moins un canal de commande de liaison montante de deuxième format sont compris dans un premier intervalle de temps ou une première sous-trame, le canal de commande de liaison montante de premier format occupe N symboles du premier intervalle de temps ou de la première sous-trame, le canal de commande de liaison montante de deuxième format occupe M symboles du premier intervalle de temps ou de la première sous-trame, et N est supérieur ou égal à M, **caractérisé en ce que** le premier l'intervalle de temps ou la première sous-trame comprend en outre au moins un canal de commande de liaison montante de troisième format ; et
un symbole occupé par au moins un de l'au moins un canal de commande de liaison montante de troisième format est complètement différent ou partiellement identique au symbole occupé par l'au moins un de l'au moins un canal de commande de liaison montante de premier format ; ou un symbole occupé par au moins un de l'au moins un canal de commande de liaison montante de troisième format est complètement différent ou partiellement identique au symbole occupé par l'au moins un de l'au moins un canal de commande de liaison montante de deuxième format.

8. Procédé selon la revendication 7,
au moins un de l'au moins un canal de commande de liaison montante de premier format et au moins un de l'au moins un canal de commande de liaison montante de deuxième format étant envoyés par un même dispositif terminal.

9. Procédé selon la revendication 7,
au moins un de l'au moins un canal de commande de liaison montante de premier format et au moins un de l'au moins un canal de commande de liaison montante de deuxième format étant envoyés par différents dispositifs terminaux ; et
un symbole occupé par au moins un de l'au moins un canal de commande de liaison montante de premier format étant complètement différent ou partiellement identique à un symbole occupé par au moins un de l'au moins un canal de commande de liaison montante de deuxième format.

10. Appareil de réception de canal de commande de liaison montante, comprenant :
un module de réception, configuré pour recevoir au moins un canal de commande de liaison montante de premier format et au moins un canal de commande de liaison montante de deuxième format, l'au moins un canal de commande de liaison montante de premier format et l'au moins un canal de commande de liaison montante de deuxième format sont compris dans un premier intervalle de temps ou une première sous-trame, le canal de commande de liaison montante de premier format occupe N symboles du premier intervalle de temps ou de la première sous-trame, le canal de commande de liaison montante de deuxième format occupe M symboles du premier intervalle de temps ou de la première sous-trame, et N est supérieur ou égal à M, **caractérisé en ce que** le premier intervalle de temps ou la première sous-trame comprend en outre au moins un canal de commande de liaison montante de troisième format ; et
un symbole occupé par au moins un de l'au moins un canal de commande de liaison montante de troisième format est complètement différent ou partiellement identique au symbole occupé par l'au moins un de l'au moins un canal de commande de liaison montante de premier format ; ou un symbole occupé par au moins un de l'au moins un canal de commande de liaison montante de troisième format est complètement différent ou partiellement identique au symbole occupé par l'au moins un de l'au moins un canal de commande de liaison montante de deuxième format.

11. Appareil selon la revendication 10,
au moins un de l'au moins un canal de commande de liaison montante de premier format et au moins un de l'au moins un canal de commande de liaison montante de deuxième format étant envoyés par un même dispositif terminal.

12. Appareil selon la revendication 10,
au moins un de l'au moins un canal de commande de liaison montante de premier format et au moins un de l'au moins un canal de commande de liaison montante de deuxième format étant envoyés par différents dispositifs terminaux ; et
un symbole occupé par au moins un de l'au moins un canal de commande de liaison montante de premier format étant complètement différent ou partiellement identique à un symbole occupé par au moins un de l'au moins un canal de commande de liaison montante de deuxième format.
